# EUROPEAN PATENT APPLICATION

(11) **EP 4 583 563 A1**
(43) Date of publication of application: **09.07.2025**
(21) Application number: 23870642.8
(22) Date of filing: 22.09.2023
(51) Int. Cl.: H04W 24/02

(54) **COMMUNICATION METHOD AND APPARATUS**

(30) Priority: 29.09.2022 CN 202211203377
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN); PAN, Xiaodan, Shenzhen, Guangdong 518129 (CN); LI, Xiangyu, Shenzhen, Guangdong 518129 (CN)
(74) Representative: Pfenning, Meinig & Partner mbB
(86) International application number: PCT/CN2023/120800
(87) International publication number: WO 2024/067411

(57) **Abstract**

A communication method and apparatus are provided, and relate to the field of communication technologies, to implement bearer multiplexing and demultiplexing functions of a sidelink relay adaptation protocol SRAP layer in a user equipment-to-network U2U relay scenario. The method includes: A first terminal device determines a first identifier based on sidelink radio bearer SLRB configuration information (901), where the SLRB configuration information indicates an SLRB between the first terminal device and a second terminal device, the first identifier is a radio bearer identifier, and the radio bearer identifier indicates a radio bearer between the first terminal device and the second terminal device. The first terminal device sends first information to a relay terminal device (902), and sends the first information to the second terminal device via the relay terminal device (903), where the first information includes one or more first identifiers and SLRB configuration information associated with the first identifier, and different first identifiers are associated with different SLRB configuration information.

## Description

This application claims priority to Chinese Patent Application No. 202211203377.8, filed with the China National Intellectual Property Administration on September 29, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a sidelink relay adaptation protocol (sidelink relay adaptation protocol, SRAP) layer may be added between a radio link control (radio link control, RLC) layer and a packet data convergence protocol (packet data convergence protocol, PDCP) layer to support bearer multiplexing and demultiplexing functions. To be specific, the SRAP layer is used to support multiplexing different bearers onto one bearer or splitting one bearer into different bearers.

In a user equipment-to-network (UE-to-network, U2N) relay (relay) scenario, communication between a network device and a remote UE may be assisted by a relay UE. The network device may determine a bearer identifier (Bearer ID), and configure a mapping relationship between a bearer identifier and an RLC channel for the relay UE and the remote UE by using an SRAP configuration, so that when communication between the remote UE and the network device is assisted by the relay UE, the bearer multiplexing and demultiplexing functions of the SRAP layer are implemented based on the mapping relationship.

In a user equipment-to-user equipment (UE-to-UE, U2U) relay scenario, communication between a transmitter UE and a receiver UE may be assisted by a relay UE. During the communication, there may be no network device involving, and therefore a mapping relationship between a bearer identifier and an RLC channel cannot be determined, and the bearer multiplexing and demultiplexing functions of the SRAP layer cannot be implemented.

In conclusion, how to implement the bearer multiplexing and demultiplexing functions of the SRAP layer in the U2U relay scenario becomes an urgent technical problem to be resolved.

### SUMMARY

Embodiments of this application provide a communication method and apparatus, to implement bearer multiplexing and demultiplexing functions of a sidelink relay adaptation protocol SRAP layer in a user equipment-to-network U2U relay scenario.

Embodiments of this application provide a communication method and apparatus, to implement a bearer mapping function of a sidelink relay adaptation protocol SRAP layer in a user equipment-to-network U2U relay scenario.

According to a first aspect, an embodiment of this application provides a communication method. The method may include: A first terminal device determines a first identifier based on sidelink radio bearer SLRB configuration information, where the SLRB configuration information indicates an SLRB between the first terminal device and a second terminal device, the first identifier is a radio bearer identifier, and the radio bearer identifier indicates a radio bearer between the first terminal device and the second terminal device. The first terminal device sends first information to a relay terminal device, and sends the first information to the second terminal device via the relay terminal device, where the first information includes one or more first identifiers and SLRB configuration information associated with the first identifier, and different first identifiers are associated with different SLRB configuration information.

Based on the first aspect, the first terminal device may determine the radio bearer identifier, and send an association relationship between the radio bearer identifier and the SLRB configuration information to the relay terminal device and the second terminal device, so that when performing data transmission, the first terminal device, the relay terminal device, or the second terminal device can correctly complete data delivery based on the association relationship, implementing a bearer mapping function of an SRAP layer.

In a possible design, that the first terminal device determines the first identifier based on the SLRB configuration information includes: The SLRB configuration information includes a PC5 configuration index; and the first terminal device determines the radio bearer identifier based on the PC5 configuration index.

In a possible design, that the first terminal device determines the radio bearer identifier based on the PC5 configuration index includes: The first terminal device determines the radio bearer identifier based on a quantity of PC5 configuration indexes, where a quantity of radio bearer identifiers is equal to the quantity of PC5 configuration indexes, a value of a 1^{st} radio bearer identifier is a first value, and a difference between two adjacent radio bearer identifiers is a second value; or the first terminal device determines the radio bearer identifier based on five least significant bits of the PC5 configuration index; or the first terminal device determines a result of performing a modulo operation on the PC5 configuration index and 32 as the radio bearer identifier.

Based on the foregoing two possible designs, the first terminal device may determine the radio bearer identifier based on the PC5 configuration index, to provide a plurality of feasible solutions for the first terminal device to determine the radio bearer identifier.

In a possible design, if a first identifier associated with first SLRB configuration information is the same as a first identifier associated with second SLRB configuration information, the method further includes: The first terminal device determines a sum of a value of the first identifier associated with the second SLRB configuration information and a third value as the first identifier associated with the second SLRB configuration information; or the first terminal device determines a difference between the value of the first identifier associated with the second SLRB configuration information and the third value as the first identifier associated with the second SLRB configuration information; or the first terminal device determines a value that is in a value set and that is not associated with SLRB configuration information as the first identifier associated with the second SLRB configuration information.

Based on this possible design, when at least two pieces of SLRB configuration information are associated with a same first identifier, the first terminal device may process the same first identifier, so that the first identifier is in one-to-one correspondence with the SLRB configuration information.

In a possible design, the first identifier is five bits; or the first identifier is six bits.

Based on this possible design, the first identifier may be five bits or six bits. When the first identifier is five bits, the first terminal device may reuse an SRAP header format in a U2N relay scenario.

In a possible design, the first information further includes first indication information, where the first indication information indicates that the radio bearer identifier is a signaling radio bearer identifier, or the first indication information indicates that the radio bearer identifier is a data radio bearer identifier. Alternatively, if a value of the radio bearer identifier belongs to a first set, the radio bearer identifier is a data radio bearer identifier; or if the value of the radio bearer identifier belongs to a second set, the radio bearer identifier is a signaling radio bearer identifier.

Based on this possible design, a signaling radio bearer identifier and a data radio bearer identifier may be distinguished by using the first indication information, or a signaling radio bearer identifier and a data radio bearer identifier may be distinguished by using values. This provides a plurality of feasible solutions for distinguishing between a signaling radio bearer identifier and a data radio bearer identifier.

In a possible design, a sidelink relay adaptation protocol SRAP entity of the first terminal device receives first data from a packet data convergence protocol PDCP entity of the first terminal device. The SRAP entity of the first terminal device determines, based on the SLRB configuration information, a first identifier associated with the PDCP entity of the first terminal device, where the first identifier is the radio bearer identifier, or the first identifier is a PC5 configuration index, or the first identifier is a logical channel identifier. The first terminal device sends, based on a first mapping relationship, second data to the relay terminal device by using a first radio link control RLC bearer associated with both the first identifier and a first local identifier, where the first local identifier indicates the second terminal device, the first mapping relationship includes a mapping relationship among the first identifier, the first local identifier, and the first RLC bearer, and the second data includes the first data, the first identifier, and the first local identifier.

Based on this possible design, when the first terminal device sends the first data to the second terminal device, the first terminal device may determine the first identifier based on the SLRB configuration information, and may indicate, by including the first identifier in an SRAP header, the relay terminal device and the second terminal device to receive the first data by using the SLRB configuration information associated with the first identifier. The first terminal device may further include, in the SRAP header, the first local identifier that indicates the second terminal device, to indicate that the first data is sent to the second terminal device.

In a possible design, the first terminal device determines the first mapping relationship based on a transmission requirement between the first terminal device and the relay terminal device.

In a possible design, the first terminal device sends, to the relay terminal device, the first local identifier and a layer-2 identifier that is of the second terminal device and that is associated with the first local identifier.

Based on this possible design, the first terminal device sends, to the relay terminal device, the first local identifier and the layer-2 identifier that is of the second terminal device and that is associated with the first local identifier, so that when receiving data including the first local identifier, the relay terminal device can determine that the data is sent to the second terminal device.

In a possible design, the SRAP entity of the first terminal device receives third data from the relay terminal device, where the third data includes fourth data, a first identifier, and a second local identifier; the second local identifier indicates the first terminal device; and the first identifier is the radio bearer identifier, or the first identifier is a PC5 configuration index, or the first identifier is a logical channel identifier. The SRAP entity of the first terminal device determines, based on the SLRB configuration information, the PDCP entity associated with the first identifier. The SRAP entity of the first terminal device sends the fourth data to the PDCP entity that is in the first terminal device and that is associated with the first identifier.

Based on this possible design, the first terminal device may determine, based on the first identifier in the received third data, to perform data receiving by using the SLRB configuration information associated with the first identifier, ensuring correct data receiving.

In a possible design, the SRAP entity of the first terminal device receives fifth data from the relay terminal device, where the fifth data includes fourth data, a first identifier, and a local identifier; the local identifier includes one or more of the following: the first local identifier and a second local identifier; the first local identifier indicates the second terminal device; the second local identifier indicates the first terminal device; and the first identifier is the radio bearer identifier, or the first identifier is a PC5 configuration index, or the first identifier is a logical channel identifier. The SRAP entity of the first terminal device determines, based on the SLRB configuration information, the PDCP entity associated with the first identifier. The SRAP entity of the first terminal device sends the fourth data to the PDCP entity that is in the first terminal device and that is associated with the first identifier.

In a possible design, the first terminal device determines, based on the first local identifier, that a source terminal device of the fourth data is the second terminal device.

Based on the foregoing two possible designs, the first terminal device may determine, based on the first identifier in the received fifth data, to perform data receiving by using the SLRB configuration information associated with the first identifier, ensuring correct data receiving. In addition, when the fifth data includes the first local identifier, the first terminal device may further determine that the source terminal device of the received data is the second terminal device.

According to a second aspect, an embodiment of this application provides a communication method. The method may include: A relay terminal device receives first information from a first terminal device, where the first information includes one or more first identifiers and sidelink radio bearer SLRB configuration information associated with the first identifier, different first identifiers are associated with different SLRB configuration information, the SLRB configuration information indicates an SLRB between the first terminal device and a second terminal device, the first identifier is a radio bearer identifier, and the radio bearer identifier indicates a radio bearer between the first terminal device and the second terminal device. The relay terminal device sends the first information to the second terminal device.

Based on the second aspect, the first terminal device may determine the radio bearer identifier, and send an association relationship between the radio bearer identifier and the SLRB configuration information to the relay terminal device and the second terminal device, so that when performing data transmission, the first terminal device, the relay terminal device, or the second terminal device can correctly complete data delivery based on the association relationship, implementing a bearer mapping function of an SRAP layer.

In a possible design, the first identifier is five bits; or the first identifier is six bits.

Based on this possible design, the first identifier may be five bits or six bits. When the first identifier is five bits, an SRAP header format in a U2N relay scenario may be reused.

In a possible design, the first information further includes first indication information, where the first indication information indicates that the radio bearer identifier is a signaling radio bearer identifier, or the first indication information indicates that the radio bearer identifier is a data radio bearer identifier. Alternatively, if a value of the radio bearer identifier belongs to a first set, the radio bearer identifier is a data radio bearer identifier; or if the value of the radio bearer identifier belongs to a second set, the radio bearer identifier is a signaling radio bearer identifier.

Based on this possible design, a signaling radio bearer identifier and a data radio bearer identifier may be distinguished by using the first indication information, or a signaling radio bearer identifier and a data radio bearer identifier may be distinguished by using values. This provides a plurality of feasible solutions for distinguishing between a signaling radio bearer identifier and a data radio bearer identifier.

In a possible design, a first sidelink relay adaptation protocol SRAP entity of the relay terminal device receives second data from the first terminal device, where the second data includes first data, a first identifier, and a first local identifier; the first local identifier indicates the second terminal device; and the first identifier is the radio bearer identifier, or the first identifier is a PC5 configuration index, or the first identifier is a logical channel identifier. The first SRAP entity of the relay terminal device sends the second data to a second SRAP entity of the relay terminal device. The second SRAP entity of the relay terminal device sends, based on a second mapping relationship associated with the first terminal device, the second data to the second terminal device by using a relay radio link control RLC bearer associated with both the first identifier and the first local identifier, where the second mapping relationship includes a mapping relationship among the first identifier, the first local identifier, and the relay RLC bearer.

Based on this possible design, when receiving the second data sent by the first terminal device, the first SRAP entity of the relay terminal device may transparently transmit the second data to the second SRAP entity of the relay terminal device without performing any processing. The second SRAP entity of the relay terminal device may send, based on the second mapping relationship associated with the first terminal device, the second data to the second terminal device by using the relay RLC bearer indicated by the second mapping relationship, to ensure correct data delivery and implement bearer mapping of the SRAP.

In a possible design, a first SRAP entity of the relay terminal device receives second data from the first terminal device, where the second data includes first data, a first identifier, and a first local identifier; the first local identifier indicates the second terminal device; and the first identifier is the radio bearer identifier, or the first identifier is a PC5 configuration index, or the first identifier is a logical channel identifier. The first SRAP entity of the relay terminal device sends the first data, the first identifier, and a local identifier to a second SRAP entity of the relay terminal device, where the local identifier includes one or more of the following: the first local identifier and a second local identifier; and the second local identifier indicates the first terminal device. The second SRAP entity of the relay terminal device sends, based on a second mapping relationship associated with the first terminal device, sixth data to the second terminal device by using a relay RLC bearer associated with both the first identifier and the first local identifier, where the second mapping relationship includes a mapping relationship among the first identifier, the first local identifier, and the relay RLC bearer; and the sixth data includes the first data, the first identifier, and the local identifier.

Based on this possible design, when receiving the second data sent by the first terminal device, the first SRAP entity of the relay terminal device may remove an SRAP header of the second data, to obtain the first data, and deliver the first data to the second SRAP entity of the relay terminal device. The first SRAP entity of the relay terminal device may further parse the SRAP header of the second data to obtain the first identifier and the first local identifier, and indicate the first identifier and the first local identifier to the second SRAP entity of the relay terminal device. The second SRAP entity of the relay terminal device may send, based on the second mapping relationship associated with the first terminal device, the second data to the second terminal device by using the relay RLC bearer indicated by the second mapping relationship, to ensure correct data delivery and implement bearer mapping of the SRAP.

In addition, the first SRAP entity of the relay terminal device may further send, to the second SRAP entity of the relay terminal device, the second local identifier that indicates the first terminal device, and the second SRAP entity of the relay terminal device may include the second local identifier in the sixth data, to indicate, to the second terminal device, that a source terminal device of the first data is the first terminal device.

In a possible design, the relay terminal device determines the second mapping relationship based on a transmission requirement between the relay terminal device and the second terminal device.

In a possible design, the second SRAP entity of the relay terminal device receives third data from the second terminal device, where the third data includes fourth data, a first identifier, and the second local identifier; the second local identifier indicates the first terminal device; and the first identifier is the radio bearer identifier, or the first identifier is a PC5 configuration index, or the first identifier is a logical channel identifier. The second SRAP entity of the relay terminal device sends the third data to the first SRAP entity of the relay terminal device. The first SRAP entity of the relay terminal device sends, based on a third mapping relationship associated with the second terminal device, the third data to the first terminal device by using a relay RLC bearer associated with both the first identifier and the second local identifier, where the third mapping relationship includes a mapping relationship among the first identifier, the second local identifier, and the relay RLC bearer.

Based on this possible design, when receiving the third data sent by the second terminal device, the second SRAP entity of the relay terminal device may transparently transmit the third data to the first SRAP entity of the relay terminal device without performing any processing. The first SRAP entity of the relay terminal device may send, based on the third mapping relationship associated with the second terminal device, the third data to the first terminal device by using the relay RLC bearer indicated by the third mapping relationship, to ensure correct data delivery and implement bearer mapping of the SRAP.

In a possible design, the second SRAP entity of the relay terminal device receives third data from the second terminal device, where the third data includes fourth data, a first identifier, and the second local identifier; the second local identifier indicates the first terminal device; and the first identifier is the radio bearer identifier, or the first identifier is a PC5 configuration index, or the first identifier is a logical channel identifier. The second SRAP entity of the relay terminal device sends the fourth data, the first identifier, and a local identifier to the first SRAP entity of the relay terminal device, where the local identifier includes one or more of the following: the first local identifier and the second local identifier; and the second local identifier indicates the first terminal device. The first SRAP entity of the relay terminal device sends, based on a third mapping relationship associated with the second terminal device, fifth data to the first terminal device by using a relay RLC bearer associated with both the first identifier and the second local identifier, where the third mapping relationship includes a mapping relationship among the first identifier, the second local identifier, and the relay RLC bearer; and the fifth data includes the fourth data, the first identifier, and the local identifier.

Based on this possible design, when receiving the third data sent by the second terminal device, the second SRAP entity of the relay terminal device may remove an SRAP header of the third data, to obtain the fourth data, and deliver the fourth data to the first SRAP entity of the relay terminal device. The second SRAP entity of the relay terminal device may further parse the SRAP header of the third data to obtain the first identifier and the second local identifier, and indicate the first identifier and the second local identifier to the first SRAP entity of the relay terminal device. The first SRAP entity of the relay terminal device may send, based on the third mapping relationship associated with the second terminal device, the fifth data to the first terminal device by using the relay RLC bearer indicated by the third mapping relationship, to ensure correct data delivery and implement bearer mapping of the SRAP.

In addition, the second SRAP entity of the relay terminal device may further send, to the first SRAP entity of the relay terminal device, the first local identifier that indicates the second terminal device, and the first SRAP entity of the relay terminal device may include the first local identifier in the fifth data, to indicate, to the first terminal device, that a source terminal device of the fourth data is the second terminal device.

In a possible design, the relay terminal device determines the third mapping relationship based on a transmission requirement between the relay terminal device and the first terminal device.

In a possible design, the relay terminal device receives, from the first terminal device, the first local identifier and a layer-2 identifier that is of the second terminal device and that is associated with the first local identifier; or the relay terminal device receives, from the second terminal device, the second local identifier and a layer-2 identifier that is of the first terminal device and that is associated with the second local identifier.

Based on this possible design, the first terminal device sends, to the relay terminal device, the first local identifier and the layer-2 identifier that is of the second terminal device and that is associated with the first local identifier, so that when receiving data including the first local identifier, the relay terminal device can determine that the data is sent to the second terminal device. The second terminal device sends, to the relay terminal device, the second local identifier and the layer-2 identifier that is of the first terminal device and that is associated with the second local identifier, so that when receiving data including the second local identifier, the relay terminal device can determine that the data is sent to the first terminal device.

According to a third aspect, an embodiment of this application provides a communication method. The method may include: A second terminal device receives first information from a first terminal device via a relay terminal device, where the first information includes one or more first identifiers and sidelink radio bearer SLRB configuration information associated with the first identifier, different first identifiers are associated with different SLRB configuration information, the SLRB configuration information indicates an SLRB between the first terminal device and the second terminal device, the first identifier is a radio bearer identifier, and the radio bearer identifier indicates a radio bearer between the first terminal device and the second terminal device. The second terminal device determines an association relationship between the first identifier and the SLRB configuration information based on the first information.

Based on the third aspect, the first terminal device may determine the radio bearer identifier, and send an association relationship between the radio bearer identifier and the SLRB configuration information to the relay terminal device and the second terminal device, so that when performing data transmission, the first terminal device, the relay terminal device, or the second terminal device can correctly complete data delivery based on the association relationship, implementing a bearer mapping function of an SRAP layer.

In a possible design, the first identifier is five bits; or the first identifier is six bits.

Based on this possible design, the first identifier may be five bits or six bits. When the first identifier is five bits, an SRAP header format in a U2N relay scenario may be reused.

In a possible design, the first information further includes first indication information, where the first indication information indicates that the radio bearer identifier is a signaling radio bearer identifier, or the first indication information indicates that the radio bearer identifier is a data radio bearer identifier. Alternatively, if a value of the radio bearer identifier belongs to a first set, the radio bearer identifier is a data radio bearer identifier; or if the value of the radio bearer identifier belongs to a second set, the radio bearer identifier is a signaling radio bearer identifier.

Based on this possible design, a signaling radio bearer identifier and a data radio bearer identifier may be distinguished by using the first indication information, or a signaling radio bearer identifier and a data radio bearer identifier may be distinguished by using values. This provides a plurality of feasible solutions for distinguishing between a signaling radio bearer identifier and a data radio bearer identifier.

In a possible design, a sidelink relay adaptation protocol SRAP entity of the second terminal device receives second data from the relay terminal device, where the second data includes first data, a first identifier, and a first local identifier; the first local identifier indicates the second terminal device; and the first identifier is the radio bearer identifier, or the first identifier is a PC5 configuration index, or the first identifier is a logical channel identifier. The SRAP entity of the second terminal device determines, based on the SLRB configuration information, a packet data convergence protocol PDCP entity associated with the first identifier. The SRAP entity of the second terminal device sends the first data to the PDCP entity that is in the second terminal device and that is associated with the first identifier.

Based on this possible design, the second terminal device may determine, based on the first identifier in the received second data, to perform data receiving by using the SLRB configuration information associated with the first identifier, ensuring correct data receiving.

In a possible design, the SRAP entity of the second terminal device receives sixth data from the relay terminal device, where the sixth data includes first data, a first identifier, and a local identifier; the local identifier includes one or more of the following: a first local identifier and a second local identifier; the first local identifier indicates the second terminal device; the second local identifier indicates the first terminal device; and the first identifier is the radio bearer identifier, or the first identifier is a PC5 configuration index, or the first identifier is a logical channel identifier. The SRAP entity of the second terminal device determines, based on the SLRB configuration information, a PDCP entity associated with the first identifier. The SRAP entity of the second terminal device sends the first data to the PDCP entity that is in the second terminal device and that is associated with the first identifier.

In a possible design, the second terminal device determines, based on the second local identifier, that a source terminal device of the first data is the first terminal device.

Based on the foregoing two possible designs, the second terminal device may determine, based on the first identifier in the received sixth data, to perform data receiving by using the SLRB configuration information associated with the first identifier, ensuring correct data receiving. In addition, when the sixth data includes the second local identifier, the second terminal device may further determine that the source terminal device of the received data is the first terminal device.

In a possible design, the SRAP entity of the second terminal device receives fourth data from the PDCP entity of the second terminal device. The SRAP entity of the second terminal device determines, based on the SLRB configuration information, the first identifier associated with the PDCP entity of the second terminal device, where the first identifier is the radio bearer identifier, or the first identifier is a PC5 configuration index, or the first identifier is a logical channel identifier. The second terminal device sends, based on a fourth mapping relationship, third data to the relay terminal device by using a second RLC bearer associated with both the first identifier and the second local identifier, where the second local identifier indicates the first terminal device; the fourth mapping relationship includes a mapping relationship among the first identifier, the second local identifier, and the second RLC bearer; and the third data includes the fourth data, the first identifier, and the second local identifier.

Based on this possible design, when the second terminal device sends the fourth data to the first terminal device, the second terminal device may determine the first identifier based on the SLRB configuration information, and may indicate, by including the first identifier in an SRAP header, the relay terminal device and the first terminal device to receive the fourth data by using the SLRB configuration information associated with the first identifier. The second terminal device may further include, in the SRAP header, the second local identifier that indicates the first terminal device, to indicate that the fourth data is sent to the first terminal device.

In a possible design, the second terminal device determines the fourth mapping relationship based on a transmission requirement between the second terminal device and the relay terminal device.

In a possible design, the second terminal device sends, to the relay terminal device, the second local identifier and a layer-2 identifier that is of the first terminal device and that is associated with the second local identifier.

Based on this possible design, the second terminal device sends, to the relay terminal device, the second local identifier and the layer-2 identifier that is of the first terminal device and that is associated with the second local identifier, so that when receiving data including the second local identifier, the relay terminal device can determine that the data is sent to the first terminal device.

According to a fourth aspect, an embodiment of this application provides a communication apparatus. The communication apparatus may be used in the first terminal device in the first aspect or the possible designs of the first aspect, to implement a function performed by the first terminal device. The communication apparatus may be the first terminal device, or may be a chip, a system-on-chip, or the like of the first terminal device. The communication apparatus may perform, by hardware or by hardware executing corresponding software, the function performed by the first terminal device. The hardware or the software includes one or more modules corresponding to the foregoing function, for example, a transceiver module and a processing module. The processing module is configured to determine a first identifier based on sidelink radio bearer SLRB configuration information, where the SLRB configuration information indicates an SLRB between the first terminal device and a second terminal device, the first identifier is a radio bearer identifier, and the radio bearer identifier indicates a radio bearer between the first terminal device and the second terminal device. The transceiver module is configured to send first information to a relay terminal device, and the transceiver module is further configured to send the first information to the second terminal device via the relay terminal device, where the first information includes one or more first identifiers and SLRB configuration information associated with the first identifier, and different first identifiers are associated with different SLRB configuration information.

In a possible design, the SLRB configuration information includes a PC5 configuration index, and the processing module is specifically configured to determine the radio bearer identifier based on the PC5 configuration index.

In a possible design, the processing module is specifically configured to determine the radio bearer identifier based on a quantity of PC5 configuration indexes, where a quantity of radio bearer identifiers is equal to the quantity of PC5 configuration indexes, a value of a 1^{st} radio bearer identifier is a first value, and a difference between two adjacent radio bearer identifiers is a second value; or the processing module is specifically configured to determine the radio bearer identifier based on five least significant bits of the PC5 configuration index; or the processing module is specifically configured to determine a result of performing a modulo operation on the PC5 configuration index and 32 as the radio bearer identifier.

In a possible design, if a first identifier associated with first SLRB configuration information is the same as a first identifier associated with second SLRB configuration information, the processing module is further configured to determine a sum of a value of the first identifier associated with the second SLRB configuration information and a third value as the first identifier associated with the second SLRB configuration information; or determine a difference between the value of the first identifier associated with the second SLRB configuration information and the third value as the first identifier associated with the second SLRB configuration information; or determine a value that is in a value set and that is not associated with SLRB configuration information as the first identifier associated with the second SLRB configuration information.

In a possible design, the first identifier is five bits; or the first identifier is six bits.

In a possible design, the first information further includes first indication information, where the first indication information indicates that the radio bearer identifier is a signaling radio bearer identifier, or the first indication information indicates that the radio bearer identifier is a data radio bearer identifier. Alternatively, if a value of the radio bearer identifier belongs to a first set, the radio bearer identifier is a data radio bearer identifier; or if the value of the radio bearer identifier belongs to a second set, the radio bearer identifier is a signaling radio bearer identifier.

In a possible design, the transceiver module is further configured to receive, by an SRAP entity, first data from a PDCP entity. The processing module is configured to determine, by the SRAP entity based on the SLRB configuration information, a first identifier associated with the PDCP entity, where the first identifier is the radio bearer identifier, or the first identifier is a PC5 configuration index, or the first identifier is a logical channel identifier. The transceiver module is further configured to send, based on a first mapping relationship, second data to the relay terminal device by using a first radio link control RLC bearer associated with both the first identifier and a first local identifier, where the first local identifier indicates the second terminal device, the first mapping relationship includes a mapping relationship among the first identifier, the first local identifier, and the first RLC bearer, and the second data includes the first data, the first identifier, and the first local identifier.

In a possible design, the processing module is further configured to determine the first mapping relationship based on a transmission requirement between the first terminal device and the relay terminal device.

In a possible design, the processing module is further configured to send, to the relay terminal device, the first local identifier and a layer-2 identifier that is of the second terminal device and that is associated with the first local identifier.

In a possible design, the transceiver module is further configured to receive, by the SRAP entity, third data from the relay terminal device, where the third data includes fourth data, a first identifier, and a second local identifier; the second local identifier indicates the first terminal device; and the first identifier is the radio bearer identifier, or the first identifier is a PC5 configuration index, or the first identifier is a logical channel identifier. The processing module is further configured to determine, by the SRAP entity based on the SLRB configuration information, the PDCP entity associated with the first identifier. The transceiver module is further configured to send, by the SRAP entity, the fourth data to the PDCP entity that is in the first terminal device and that is associated with the first identifier.

In a possible design, the transceiver module is further configured to receive, by the SRAP entity, fifth data from the relay terminal device, where the fifth data includes fourth data, a first identifier, and a local identifier; the local identifier includes one or more of the following: the first local identifier and a second local identifier; the first local identifier indicates the second terminal device; the second local identifier indicates the first terminal device; and the first identifier is the radio bearer identifier, or the first identifier is a PC5 configuration index, or the first identifier is a logical channel identifier. The processing module is further configured to determine, by the SRAP entity based on the SLRB configuration information, the PDCP entity associated with the first identifier. The transceiver module is further configured to send, by the SRAP entity, fourth data to the PDCP entity that is in the first terminal device and that is associated with the first identifier.

In a possible design, the processing module is further configured to determine, based on the first local identifier, that a source terminal device of the fourth data is the second terminal device.

It should be noted that the modules in the fourth aspect or the possible designs of the fourth aspect can perform the corresponding functions in the method examples in the first aspect. For details, refer to the detailed descriptions in the method examples. For beneficial effects, refer to the related descriptions in the first aspect. Details are not described herein again.

According to a fifth aspect, an embodiment of this application provides a communication apparatus. The communication apparatus may be used in the relay terminal device in the second aspect or the possible designs of the second aspect, to implement a function performed by the relay terminal device. The communication apparatus may be the relay terminal device, or may be a chip, a system-on-chip, or the like of the relay terminal device. The communication apparatus may perform, by hardware or by hardware executing corresponding software, the function performed by the relay terminal device. The hardware or the software includes one or more modules corresponding to the foregoing function, for example, a transceiver module and a processing module. The transceiver module is configured to receive first information from a first terminal device, where the first information includes one or more first identifiers and sidelink radio bearer SLRB configuration information associated with the first identifier, different first identifiers are associated with different SLRB configuration information, the SLRB configuration information indicates an SLRB between the first terminal device and a second terminal device, the first identifier is a radio bearer identifier, and the radio bearer identifier indicates a radio bearer between the first terminal device and the second terminal device. The transceiver module is further configured to send the first information to the second terminal device.

In a possible design, the first identifier is five bits; or the first identifier is six bits.

In a possible design, the first information further includes first indication information, where the first indication information indicates that the radio bearer identifier is a signaling radio bearer identifier, or the first indication information indicates that the radio bearer identifier is a data radio bearer identifier. Alternatively, if a value of the radio bearer identifier belongs to a first set, the radio bearer identifier is a data radio bearer identifier; or if the value of the radio bearer identifier belongs to a second set, the radio bearer identifier is a signaling radio bearer identifier.

In a possible design, the transceiver module is further configured to receive, by a first SRAP entity, second data from the first terminal device, where the second data includes first data, a first identifier, and a first local identifier; the first local identifier indicates the second terminal device; and the first identifier is the radio bearer identifier, or the first identifier is a PC5 configuration index, or the first identifier is a logical channel identifier. The transceiver module is further configured to send, by the first SRAP entity, the second data to a second SRAP entity. The transceiver module is further configured to send, by the second SRAP entity, based on a second mapping relationship associated with the first terminal device, the second data to the second terminal device by using a relay radio link control RLC bearer associated with both the first identifier and the first local identifier, where the second mapping relationship includes a mapping relationship among the first identifier, the first local identifier, and the relay RLC bearer.

In a possible design, the transceiver module is further configured to receive, by a first SRAP entity, second data from the first terminal device, where the second data includes first data, a first identifier, and a first local identifier; the first local identifier indicates the second terminal device; and the first identifier is the radio bearer identifier, or the first identifier is a PC5 configuration index, or the first identifier is a logical channel identifier. The transceiver module is further configured to send, by the first SRAP entity, the first data, the first identifier, and a local identifier to a second SRAP entity, where the local identifier includes one or more of the following: the first local identifier and a second local identifier; and the second local identifier indicates the first terminal device. The transceiver module is further configured to send, by the second SRAP entity based on a second mapping relationship associated with the first terminal device, sixth data to the second terminal device by using a relay RLC bearer associated with both the first identifier and the first local identifier, where the second mapping relationship includes a mapping relationship among the first identifier, the first local identifier, and the relay RLC bearer; and the sixth data includes the first data, the first identifier, and the local identifier.

In a possible design, the processing module is configured to determine the second mapping relationship based on a transmission requirement between the relay terminal device and the second terminal device.

In a possible design, the transceiver module is further configured to receive, by the second SRAP entity, third data from the second terminal device, where the third data includes fourth data, a first identifier, and the second local identifier; the second local identifier indicates the first terminal device; and the first identifier is the radio bearer identifier, or the first identifier is a PC5 configuration index, or the first identifier is a logical channel identifier. The transceiver module is further configured to send, by the second SRAP entity, the third data to the first SRAP entity. The transceiver module is further configured to send, by the first SRAP entity based on a third mapping relationship associated with the second terminal device, the third data to the first terminal device by using a relay RLC bearer associated with both the first identifier and the second local identifier, where the third mapping relationship includes a mapping relationship among the first identifier, the second local identifier, and the relay RLC bearer.

In a possible design, the transceiver module is further configured to receive, by the second SRAP entity, third data from the second terminal device, where the third data includes fourth data, a first identifier, and the second local identifier; the second local identifier indicates the first terminal device; and the first identifier is the radio bearer identifier, or the first identifier is a PC5 configuration index, or the first identifier is a logical channel identifier. The transceiver module is further configured to send, by the second SRAP entity, the fourth data, the first identifier, and a local identifier to the first SRAP entity, where the local identifier includes one or more of the following: the first local identifier and the second local identifier; and the second local identifier indicates the first terminal device. The transceiver module is further configured to send, by the first SRAP entity based on a third mapping relationship associated with the second terminal device, fifth data to the first terminal device by using a relay RLC bearer associated with both the first identifier and the second local identifier, where the third mapping relationship includes a mapping relationship among the first identifier, the second local identifier, and the relay RLC bearer; and the fifth data includes the fourth data, the first identifier, and the local identifier.

In a possible design, the processing module is further configured to determine the third mapping relationship based on a transmission requirement between the relay terminal device and the first terminal device.

In a possible design, the transceiver module is further configured to receive, from the first terminal device, the first local identifier and a layer-2 identifier that is of the second terminal device and that is associated with the first local identifier; or the transceiver module is further configured to receive, from the second terminal device, the second local identifier and a layer-2 identifier that is of the first terminal device and that is associated with the second local identifier.

It should be noted that the modules in the fifth aspect or the possible designs of the fifth aspect can perform the corresponding functions in the method examples in the second aspect. For details, refer to the detailed descriptions in the method examples. For beneficial effects, refer to the related descriptions in the second aspect. Details are not described herein again.

According to a sixth aspect, an embodiment of this application provides a communication apparatus. The communication apparatus may be used in the second terminal device in the third aspect or the possible designs of the third aspect, to implement a function performed by the second terminal device. The communication apparatus may be the second terminal device, or may be a chip, a system-on-chip, or the like of the second terminal device. The communication apparatus may perform, by hardware or by hardware executing corresponding software, the function performed by the second terminal device. The hardware or the software includes one or more modules corresponding to the foregoing function, for example, a transceiver module and a processing module. The transceiver module is configured to receive first information from a first terminal device via a relay terminal device, where the first information includes one or more first identifiers and sidelink radio bearer SLRB configuration information associated with the first identifier, different first identifiers are associated with different SLRB configuration information, the SLRB configuration information indicates an SLRB between the first terminal device and the second terminal device, the first identifier is a radio bearer identifier, and the radio bearer identifier indicates a radio bearer between the first terminal device and the second terminal device. The processing module is configured to determine an association relationship between the first identifier and the SLRB configuration information based on the first information.

In a possible design, the first identifier is five bits; or the first identifier is six bits.

In a possible design, the first information further includes first indication information, where the first indication information indicates that the radio bearer identifier is a signaling radio bearer identifier, or the first indication information indicates that the radio bearer identifier is a data radio bearer identifier. Alternatively, if a value of the radio bearer identifier belongs to a first set, the radio bearer identifier is a data radio bearer identifier; or if the value of the radio bearer identifier belongs to a second set, the radio bearer identifier is a signaling radio bearer identifier.

In a possible design, the transceiver module is further configured to receive, by an SRAP entity, second data from the relay terminal device, where the second data includes first data, a first identifier, and a first local identifier; the first local identifier indicates the second terminal device; and the first identifier is the radio bearer identifier, or the first identifier is a PC5 configuration index, or the first identifier is a logical channel identifier. The processing module is further configured to determine, by the SRAP entity based on the SLRB configuration information, a packet data convergence protocol PDCP entity associated with the first identifier. The transceiver module is further configured to send, by the SRAP entity, the first data to the PDCP entity that is in the second terminal device and that is associated with the first identifier.

In a possible design, the transceiver module is further configured to receive, by the SRAP entity, sixth data from the relay terminal device, where the sixth data includes first data, a first identifier, and a local identifier; the local identifier includes one or more of the following: a first local identifier and a second local identifier; the first local identifier indicates the second terminal device; the second local identifier indicates the first terminal device; and the first identifier is the radio bearer identifier, or the first identifier is a PC5 configuration index, or the first identifier is a logical channel identifier. The processing module is further configured to determine, by the SRAP entity based on the SLRB configuration information, a PDCP entity associated with the first identifier. The transceiver module is further configured to send, by the SRAP entity, the first data to the PDCP entity that is in the second terminal device and that is associated with the first identifier.

In a possible design, the processing module is further configured to determine, based on the second local identifier, that a source terminal device of the first data is the first terminal device.

In a possible design, the transceiver module is further configured to receive, by the SRAP entity, fourth data from the PDCP entity of the second terminal device. The processing module is further configured to determine, by the SRAP entity based on the SLRB configuration information, the first identifier associated with the PDCP entity of the second terminal device, where the first identifier is the radio bearer identifier, or the first identifier is a PC5 configuration index, or the first identifier is a logical channel identifier. The transceiver module is further configured to send, based on a fourth mapping relationship, third data to the relay terminal device by using a second RLC bearer associated with both the first identifier and the second local identifier, where the second local identifier indicates the first terminal device; the fourth mapping relationship includes a mapping relationship among the first identifier, the second local identifier, and the second RLC bearer; and the third data includes the fourth data, the first identifier, and the second local identifier.

In a possible design, the processing module is further configured to determine the fourth mapping relationship based on a transmission requirement between the second terminal device and the relay terminal device.

In a possible design, the transceiver module is further configured to send, to the relay terminal device, the second local identifier and a layer-2 identifier that is of the first terminal device and that is associated with the second local identifier.

It should be noted that the modules in the sixth aspect or the possible designs of the sixth aspect can perform the corresponding functions in the method examples in the third aspect. For details, refer to the detailed descriptions in the method examples. For beneficial effects, refer to the related descriptions in the third aspect. Details are not described herein again.

According to a seventh aspect, an embodiment of this application provides a communication apparatus. The communication apparatus includes one or more processors. The one or more processors are configured to run a computer program or instructions. When the one or more processors execute the computer instruction or the instructions, the communication apparatus is enabled to perform the communication method according to any one of the first aspect to the third aspect.

In a possible design, the communication apparatus further includes one or more memories, the one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighth aspect, an embodiment of this application provides a communication apparatus. The communication apparatus includes an input/output interface and a logic circuit. The input/output interface is configured to input and/or output information. The logic circuit is configured to perform the communication method according to any one of the first aspect to the third aspect, to perform processing based on information and/or generate information.

According to a ninth aspect, an embodiment of this application provides a computer-readable storage medium. The computer-readable storage medium stores computer instructions or a program. When the computer instructions or the program is run on a computer, the communication method according to any one of the first aspect to the third aspect is performed.

According to a tenth aspect, an embodiment of this application provides a computer program product including computer instructions. When the computer program product is run on a computer, the communication method according to any one of the first aspect to the third aspect is performed.

According to an eleventh aspect, an embodiment of this application provides a computer program. When the computer program is run on a computer, the communication method according to any one of the first aspect to the third aspect is performed.

For technical effects brought by any one of the designs of the seventh aspect to the eleventh aspect, refer to the technical effects brought by any one of the first aspect to the third aspect.

According to a twelfth aspect, a communication system is provided. The communication system may include the first terminal device according to the fourth aspect, the relay terminal device according to the fifth aspect, and the second terminal device according to the sixth aspect.

### BRIEF DESCRIPTION OF DRAWINGS

FIG. 1 is a diagram of sidelink communication according to an embodiment of this application;
FIG. 2 is a diagram of a control plane protocol stack according to an embodiment of this application;
FIG. 3 is a diagram of a user plane protocol stack according to an embodiment of this application;
FIG. 4 is a diagram of D2D communication according to an embodiment of this application;
FIG. 5 is a diagram of an SRAP header format in a U2N relay scenario according to an embodiment of this application;
FIG. 6 is a diagram of a unicast establishment process according to an embodiment of this application;
FIG. 7 is a diagram of a communication system according to an embodiment of this application;
FIG. 8 is a diagram of composition of a communication apparatus according to an embodiment of this application;
FIG. 9 is a flowchart of a communication method according to an embodiment of this application;
FIG. 10 is a diagram of an SRAP header format in a U2U relay scenario according to an embodiment of this application;
FIG. 11A and FIG. 11B are a flowchart of a communication method according to an embodiment of this application;
FIG. 12 is a diagram of a user plane protocol stack according to an embodiment of this application;
FIG. 13A and FIG. 13B are a flowchart of a communication method according to an embodiment of this application;
FIG. 14 is a diagram of a structure of a communication apparatus according to an embodiment of this application; and
FIG. 15 is a diagram of a composition of a communication apparatus according to an embodiment of this application.

### DESCRIPTION OF EMBODIMENTS

Before embodiments of this application are described, technical terms used in embodiments of this application are described.

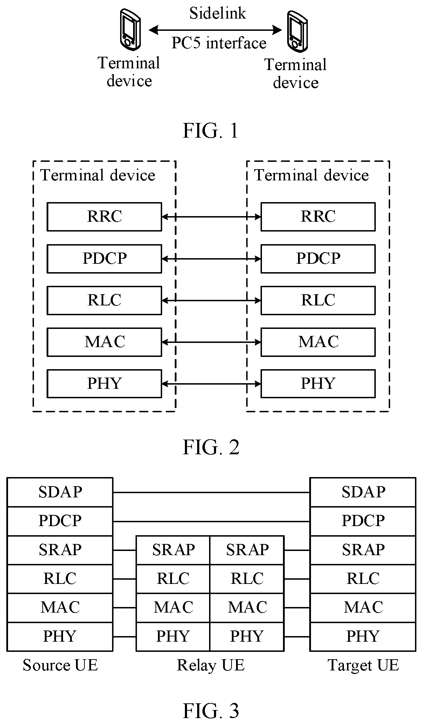

**Sidelink (sidelink, SL) communication:** In a wireless communication system, data communication may be performed between terminal devices via a network device, or communication between terminal devices may be directly performed without using a network device. As shown in FIG. 1, a link between terminal devices may be referred to as a sidelink, and an interface between terminal devices may be referred to as a PC5 interface (in other words, an interface corresponding to an SL is referred to as a PC5 interface), which is similar to a Uu interface between a terminal device and a network device.

Communication between terminal devices may be performed by using a protocol stack. The protocol stack may include a control plane protocol stack and a user plane protocol stack. As shown in FIG. 2, the control plane protocol stack may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer.

For example, a typical application scenario of SL communication is vehicle-to-everything (vehicle-to-everything, V2X). In vehicle-to-everything, each vehicle is a terminal device, and data transmission may be directly performed between terminal devices through an SL without using a network device, to effectively reduce a communication delay.

SL communication may support broadcast communication, unicast communication, and multicast communication.

The broadcast communication is similar to system information broadcast by a base station. To be specific, a terminal device may send data of a broadcast service without encryption. Any other terminal device interested in the broadcast service within an effective reception scope may receive the data of the broadcast service.

The unicast communication is similar to data communication performed after an RRC connection is established between a terminal device and a base station. A unicast connection first needs to be established between two terminal devices before data communication is performed between the two terminal devices based on a negotiated identifier. The data may be encrypted or may not be encrypted. Compared with the broadcast communication, the unicast communication can be performed only between two terminal devices that establish a unicast connection.

The multicast communication refers to communication between all terminal devices in a communication group, and any terminal device in the group can receive and send data of a multicast service.

In the foregoing unicast communication process, one time of unicast communication on an SL corresponds to a pair of a source layer-2 identifier (source layer-2 identifier, Source L2 ID) and a destination layer-2 identifier (destination layer-2 identifier, Destination L2 ID). A subheader of each SL media access control protocol data unit (media access control protocol data unit, MAC PDU) includes the source L2 ID and the destination L2 ID, so that data is transmitted to a correct receiving end.

**Radio bearer (radio bearer, RB):** is a general term of a series of protocol entities and configurations allocated by a base station to a terminal device, is a service that is provided by a layer-2 (layer-2, L2) and that is used for transmission of user data between the terminal device and the base station, and includes a series of resources allocated by a PDCP protocol entity, an RLC protocol entity, a MAC protocol entity, and a PHY. Radio bearers may be classified into a data radio bearer (data radio bearer, DRB) and a signaling radio bearer (signaling radio bearer, SRB). The DRB is used to carry data, and the SRB is used to carry a signaling message. In an SL communication scenario, radio bearers are referred to as SL radio bearers (sidelink radio bearers, SLRBs), including an SL DRB and an SL SRB.

**RLC bearer (RLC bearer):** refers to a protocol entity and a configuration below an RLC layer, is a lower layer part of a radio bearer, and includes a series of resources such as an RLC protocol entity and a logical channel. RLC bearers may be classified into a Uu RLC bearer and a PC5 RLC bearer. The Uu RLC bearer is an RLC bearer on a Uu link (or a Uu interface), and the PC5 RLC bearer is an RLC bearer on an SL link (or a PC5 interface).

**User equipment-to-user equipment (UE-to-UE, U2U) relay (relay) communication:** includes one source UE (Source UE), one or more target UEs (Target UEs), and one relay UE (Relay UE), where there is a requirement for unicast communication between the source UE and the target UE, and the relay UE may be used for SL coverage enhancement (for example, the source UE and the target UE have poor coverage or are out of coverage) or capacity improvement (for example, the relay UE is a terminal device with a strong capability). The source UE and the target UE may transfer data and signaling via the relay UE. In an L2-based relay mode, as shown in a user plane protocol stack shown in FIG. 3, user plane data is relayed and forwarded on a relay UE side below a PDCP layer.

In addition, in a protocol architecture shown in FIG. 3, a sidelink relay adaptation protocol (sidelink relay adaptation protocol, SRAP) layer is added between an RLC layer and the PDCP layer. The SRAP layer is mainly used for bearer multiplexing and demultiplexing, that is, the SRAP layer may support multiplexing different bearers onto one bearer or splitting one bearer into different bearers.

When a source UE communicates with a plurality of target UEs via one relay UE, to distinguish between data belonging to different target UEs, a local identifier (local ID) may be allocated to each target UE. The local identifier is used only in an adaptation protocol layer, and the local identifier may be carried in a data packet routing process to indicate the target UE to which the data belongs.

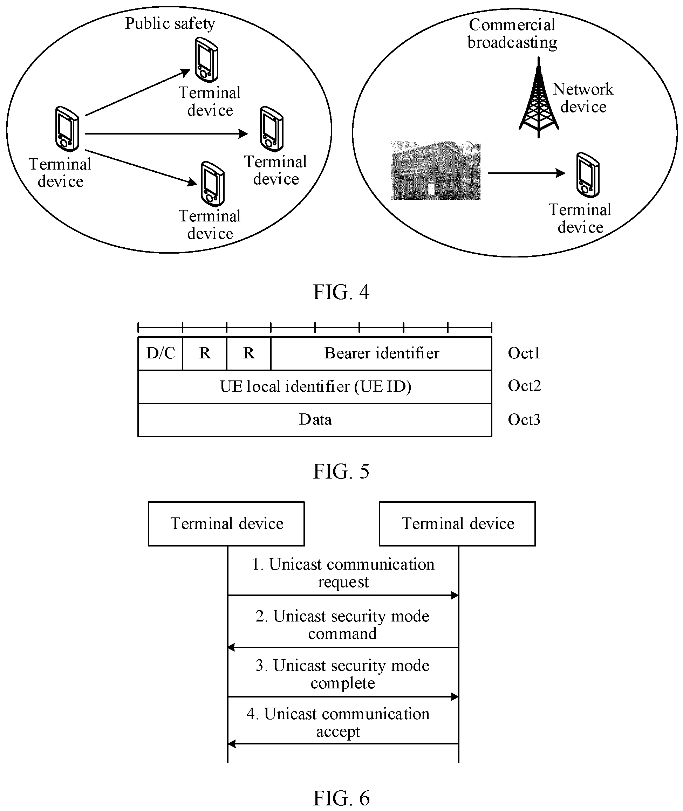

**Device-to-device (device-to-device, D2D) technology:** The D2D technology is introduced in a long term evolution (Long Term Evolution, LTE) release 12 (release 12, R12) communication system. R12 D2D communication is mainly oriented to public safety (public safety), and includes two parts: R12 D2D communication and R12 D2D discovery. As shown in FIG. 4, R12 D2D communication is oriented to public safety and supports multicast communication (one-to-many D2D communication), and R12 D2D discovery supports simple commercial broadcast (for example, advertisement broadcast). The R12 D2D technology is further enhanced in LTE R13. LTE R13 D2D communication is used for public safety, but supports unicast communication (one-to-one), and supports user equipment-to-network (UE-to-network, U2N) relay (relay) communication to improve coverage.

With development of technologies, D2D communication and UE relay communication are introduced into a fifth generation (fifth generation, 5G) new radio (new radio, NR) communication system. In addition to public safety, D2D communication and UE relay communication in 5G NR mainly consider improvement of network and user system performance, for example, coverage enhancement and capacity improvement. For R18, U2U relay communication is a problem that needs to be studied. For example, an operator may deploy a relay UE, where the relay UE has a stronger capability, for example, has more receive and transmit antennas. In this case, the relay UE may assist other UEs in forwarding data, for example, forwarding data from a source UE to a target UE, to improve coverage and increase a communication distance between the source UE and the target UE. Both communication between the source UE and the relay UE and communication between the relay UE and the target UE are performed through an SL link.

**SLRB bearer configuration:** In R16, a transmitter UE in a connected mode may report a quality of service (quality of service, QoS) information list to a base station by using a sidelink user equipment information (sidelink UE information, SUI) message. The QoS information list may include identification information of each PC5 QoS flow (PC5 QoS flow identifier, PFI) and a corresponding QoS parameter. The base station performs SLRB bearer configuration for the UE based on the QoS information reported by the transmitter UE. The bearer configuration may meet the QoS parameter. In R16 NR, an SLRB configuration index is SLRB-Uu-ConfigIndex, which identifies RB configuration information on a network side and has a size of nine bits. SLRB-Uu-ConfigIndex and the corresponding RB configuration are specific to a UE. The base station may further deliver an SL bearer configuration to the UE by using an RRC reconfiguration (RRCReconfiguration) message. Specific content may be included in an SL configuration dedicated NR information element IE (SL-ConfigDedicatedNR). The base station may configure an SLRB of the UE by using SL-ConfigDedicatedNR, including bearers at a PDCP layer and above the PDCP layer and bearers at a PC5 RLC layer and below the PC5 RLC layer.

Specific configuration content of the SLRB is included in an SL radio bearer configuration information element IE (SL-RadiobearerConfig), and mainly includes configuration information of a service data adaptation protocol (service data adaptation protocol, SDAP) layer and a PDCP layer that correspond to SLRB-Uu-ConfigIndex. Specific configuration content of a PC5 RLC bearer is included in an SL-RLC bearer configuration information element (IE SL-RLC-BearerConfig), and mainly includes configuration information at the RLC layer and below the RLC layer.

The transmitter UE determines SLRB-PC5-ConfigIndex and associates SLRB-PC5-ConfigIndex with a corresponding SLRB configuration, where SLRB-PC5-ConfigIndex is specific to a unicast connection and has a size of nine bits. The transmitter UE sends the SLRB configuration to a receiver UE by using an SL-RRC message. The SLRB configuration in the SL-RRC message sent by the transmitter UE may include one or more of an SLRB configuration index (PC5-ConfigIndex), an SDAP configuration, a PDCP configuration, an RLC configuration, and a logical channel (logical channel, LCH) configuration. The LCH configuration may include a logical channel identifier (logical channel identifier, LCID).

Different from the SLRB bearer configuration in R16, in a U2N relay communication scenario in R17, to support bearer multiplexing and demultiplexing functions, an SRAP layer is introduced, and a base station determines a bearer identifier (bearer ID). As shown in FIG. 5, an SRAP header may include a bearer identifier and a UE local identifier (UE ID), and a size of the bearer identifier may be five bits. The base station may configure a mapping relationship between a bearer identifier and an RLC channel for a relay UE and a remote UE by using an SRAP configuration, so that when communication between the remote UE and a network device is assisted by the relay UE, the bearer multiplexing and demultiplexing functions of the SRAP layer are implemented based on the mapping relationship.

For the SRAP configuration, the base station may configure the mapping relationship between a bearer identifier and an RLC channel for the relay UE and the remote UE by using RRC reconfiguration information, and the base station may further configure a Uu radio bearer and a PC5 RLC bearer for the relay UE and the remote UE.

**SL communication security protection:** Multicast and broadcast security is ensured by an application layer. Unicast communication supports security protection at an access stratum (access stratum, AS) (including security protection at one or more of an RRC layer, an SDAP layer, a PDCP layer, an RLC layer, a MAC layer, and a PHY layer).

Security protection at the AS includes integrity protection and encryption protection, and corresponding algorithms and parameters for integrity protection and encryption protection are negotiated at an upper layer in a unicast establishment process shown in FIG. 6 (corresponding to a message 2 and a message 3 in FIG. 6). After completing security negotiation, the upper layer (for example, a PC5-S layer or a V2X layer) delivers the corresponding security protection algorithms and parameters to the AS, and subsequently, a PDCP entity of the AS performs security protection at the AS. In addition, input parameters of a security algorithm of the AS include four parameters: a key (KEY, for example, an NR PC5 integrity key (NR PC5 integrity key, NRPIK)), a count (COUNT), a bearer (BEARER), and a direction (DIRECTION). BEARER is defined as five least significant bits of an LCID (LSB 5 bits of LCID) for an SL, and BEARER is defined as RB identity-1 for a Uu, that is, the bearer identifier is subtracted by 1.

When performing security protection at the AS, the PDCP entity may perform security protection based on each input parameter corresponding to the PDCP entity and a corresponding algorithm. On the SL, a BEARER parameter corresponding to a PDCP entity is determined based on an LCID corresponding to an LCH corresponding to the PDCP entity, or may be determined based on an LCID corresponding to an LCH configuration associated with a PDCP entity configuration corresponding to the PDCP entity.

Based on the foregoing related descriptions of unicast communication and SLRB configuration, in a U2U relay scenario, the SRAP layer also needs to support bearer multiplexing and demultiplexing functions. However, in R16, when the base station configures SLRB configuration information for the UE, neither an end-to-end bearer identifier used between UEs nor an SRAP configuration is included. Although R17 includes a bearer identifier, the bearer identifier is determined by the base station and configured for the UE. In the U2U relay scenario, communication between a transmitter UE and a receiver UE may be assisted by a relay UE. In the U2U relay scenario, RRC modes of the transmitter UE, the relay UE, and the receiver UE are not limited, or even all UEs may be in an out of coverage (out of coverage, OOC) mode. In other words, in the U2U relay scenario, there may be no base station involving, or different UEs may be separately located in coverage of different base stations. In this case, no central node involves, and therefore a unified bearer identifier between the transmitter UE and the receiver UE cannot be determined, a mapping relationship between a bearer identifier and an RLC channel cannot be determined, and bearer multiplexing and demultiplexing functions of the SRAP layer cannot be implemented. Consequently, data sent by the transmitter UE to the receiver UE may fail to be correctly delivered.

In conclusion, how to implement the bearer multiplexing and demultiplexing functions of the SRAP layer in the U2U relay scenario becomes an urgent technical problem to be resolved.

To resolve the technical problem, an embodiment of this application provides a communication method. In the method, a first terminal device may determine a first identifier based on SLRB configuration information, and send, to a relay terminal device and a second terminal device, first information including one or more first identifiers and SLRB configuration information associated with the first identifier. The SLRB configuration information indicates an SLRB between the first terminal device and the second terminal device. The first identifier is a radio bearer identifier. The radio bearer identifier indicates a radio bearer between the first terminal device and the second terminal device. Different first identifiers are associated with different SLRB configuration information.

In this embodiment of this application, the first terminal device may determine the radio bearer identifier, and send an association relationship between the radio bearer identifier and the SLRB configuration information to the relay terminal device and the second terminal device, so that when performing data transmission, the first terminal device, the relay terminal device, or the second terminal device can correctly complete data delivery based on the association relationship, implementing bearer multiplexing and demultiplexing functions of an SRAP layer.

The following describes implementations of embodiments of this application in detail with reference to the accompanying drawings in this specification.

The communication method provided in embodiments of this application may be applied to any communication system. The communication system may be a 3rd generation partnership project (3rd generation partnership project, 3GPP) communication system, for example, an LTE communication system, or may be a 5G mobile communication system, an NR communication system, or a new radio vehicle-to-everything (vehicle-to-everything, NR V2X) system. The communication method may alternatively be applied to a system in which LTE and 5G hybrid networking is used, or a non-terrestrial network (non-terrestrial network, NTN) system, a device-to-device (device-to-device, D2D) communication system, a machine-to-machine (machine-to-machine, M2M) communication system, an internet of things (internet of things, IoT), or another next-generation communication system, for example, a future communication system like 6G or a non-3GPP communication system. This is not limited.

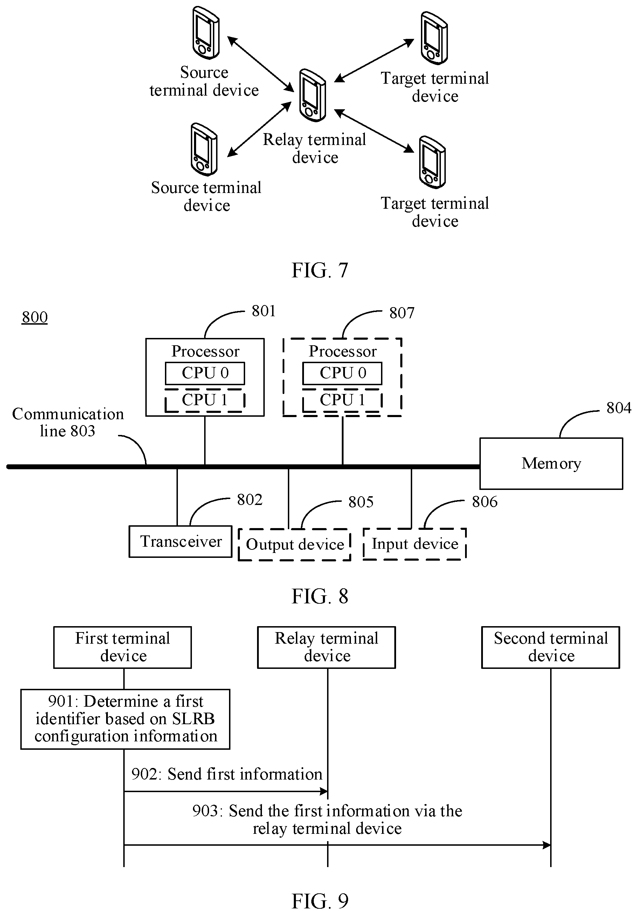

The following uses FIG. 7 as an example to describe a communication system provided in embodiments of this application.

FIG. 7 is a diagram of a communication system according to an embodiment of this application. As shown in FIG. 7, the communication system may include one or more source terminal devices, a relay terminal device, and one or more target terminal devices.

The source terminal device communicates with the target terminal device via the relay terminal device. The source terminal device, the relay terminal device, and the target terminal device may be in an RRC connected mode, an RRC idle mode, an RRC inactive mode, or an OOC mode. This is not limited. SL unicast communication is performed between the source terminal device and the relay terminal device and between the relay terminal device and the target terminal device.

The communication method provided in embodiments of this application may be applied to a U2U relay scenario based on layer-2 relay.

The terminal device in FIG. 7 may be a device having a wireless transceiver function or a chip or a chip system that may be disposed in the device, may allow a user to access a network, and is a device configured to provide voice and/or data connectivity for the user. The terminal device may also be referred to as a user equipment (user equipment, UE), a terminal (terminal), a mobile station (mobile station, MS), a mobile terminal (mobile terminal, MT), or the like. Specifically, the terminal device in FIG. 7 may be a mobile phone (mobile phone), a tablet computer, or a computer having a wireless transceiver function. The terminal device may alternatively be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

Optionally, the communication system shown in FIG. 7 further includes a network device.

The network device may be any device that is deployed in an access network and that can perform wireless communication with the terminal device, and is mainly configured to implement functions such as radio physical control, resource scheduling and radio resource management, radio access control, and mobility management. Specifically, a first network device may be a device supporting wired access, or may be a device supporting wireless access. For example, the first network device may be an access network (access network, AN) device/a radio access network (radio access network, RAN) device, and includes a plurality of AN/RAN nodes. The AN/RAN node may be an access point (access point, AP), a NodeB (NodeB, NB), a macro base station, a micro base station, a relay station, an enhanced NodeB (enhance NodeB, eNB), a next generation NodeB (NR NodeB, gNB), a transmission reception point (transmission reception point, TRP), a transmission point (transmission point, TP), another access node, or the like. This is not limited.

It should be noted that the terminal device and the network device in this embodiment of this application each may be one or more chips, or may be a system-on-chip (system-on-chip, SoC), or the like. FIG. 7 is merely an example diagram, and a quantity of devices included in FIG. 7 is not limited. In addition, in addition to the devices shown in FIG. 7, the communication system may further include another device. Names of the devices and of links in FIG. 7 are not limited. In addition to the names shown in FIG. 7, the devices and the links may have other names. This is not limited.

During specific implementation, as shown in FIG. 7, for example, each terminal device or each network device may use a composition structure shown in FIG. 8, or include components shown in FIG. 8. FIG. 8 is a diagram of composition of a communication apparatus 800 according to an embodiment of this application. The communication apparatus 800 may be a terminal device or a chip or a system-on-chip in the terminal device, or may be a network device or a chip or a system-on-chip in the network device, or may be a core network device or a chip or a system-on-chip in the core network device. As shown in FIG. 8, the communication apparatus 800 includes a processor 801, a transceiver 802, and a communication line 803.

Further, the communication apparatus 800 may further include a memory 804. The processor 801, the memory 804, and the transceiver 802 may be connected through the communication line 803.

The processor 801 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 801 may alternatively be another apparatus having a processing function, for example, a circuit, a component, or a software module. This is not limited.

The transceiver 802 is configured to communicate with another device or another communication network. The another communication network may be the Ethernet, a radio access network (radio access network, RAN), a wireless local area network (wireless local area network, WLAN), or the like. The transceiver 802 may be a module, a circuit, a transceiver, or any apparatus that can implement communication.

The communication line 803 is configured to transfer information between components included in the communication apparatus 800.

The memory 804 is configured to store instructions. The instructions may be a computer program.

The memory 804 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

It should be noted that the memory 804 may exist independently of the processor 801, or may be integrated with the processor 801. The memory 804 may be configured to store instructions, program code, some data, or the like. The memory 804 may be located inside the communication apparatus 800, or may be located outside the communication apparatus 800. This is not limited. The processor 801 is configured to execute the instructions stored in the memory 804, to implement a communication method provided in the following embodiments of this application.

In an example, the processor 801 may include one or more CPUs, for example, a CPU 0 and a CPU 1 in FIG. 8.

In an optional implementation, the communication apparatus 800 includes a plurality of processors. For example, the communication apparatus 800 may further include a processor 807 in addition to the processor 801 in FIG. 8.

In an optional implementation, the communication apparatus 800 further includes an output device 805 and an input device 806. For example, the input device 806 is a device like a keyboard, a mouse, a microphone, or a joystick, and the output device 805 is a device like a display or a speaker (speaker).

It should be noted that the communication apparatus 800 may be a desktop computer, a portable computer, a network server, a mobile phone, a tablet computer, a wireless terminal, an embedded device, a chip system, or a device having a structure similar to that in FIG. 8. In addition, the composition structure shown in FIG. 8 does not constitute a limitation on the communication apparatus. In addition to the components shown in FIG. 8, the communication apparatus may include more or fewer components than those shown in the figure, or some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 7, a communication method provided in embodiments of this application is described with reference to FIG. 9. A first terminal device may be any transmitter terminal device (which may be a source terminal device or a target terminal device) in the communication system shown in FIG. 7, a relay terminal device may be any relay terminal device in the communication system shown in FIG. 7, and a second terminal device may be any receiver terminal device (which may be a target terminal device or a source terminal device) in the communication system shown in FIG. 7. The first terminal device, the relay terminal device, and the second terminal device described in the following embodiments each may have the components shown in FIG. 8. Processing performed by a single execution body (the first terminal device, the relay terminal device, or the second terminal device) shown in embodiments of this application may alternatively be performed by a plurality of execution bodies. These execution bodies may be logically and/or physically separated. This is not limited.

FIG. 9 is a flowchart of a communication method according to an embodiment of this application. As shown in FIG. 9, the method may include the following steps.

Step 901: The first terminal device determines a first identifier based on SLRB configuration information.

The SLRB configuration information may indicate an SLRB between the first terminal device and the second terminal device. The first identifier may be a radio bearer identifier, and the radio bearer identifier may indicate a radio bearer between the first terminal device and the second terminal device. Alternatively, the first identifier may be a PC5 configuration index. Alternatively, the first identifier may be a logical channel identifier.

The SLRB configuration information may include one or more of the following: SDAP configuration information, PDCP configuration information, SRAP configuration information, RLC configuration information, MAC configuration information, and PHY configuration information.

The first terminal device may be a source terminal device or a target terminal device based on different data transmission directions. In other words, the terminal device has different transmit/receive configurations based on different data transmission directions between the source terminal device and the target terminal device. For example, when the source terminal device is a data sender (or described as a transmitter terminal device or a first terminal device), the source terminal device may determine the first identifier and the corresponding SLRB configuration information, and send the first identifier and the corresponding SLRB configuration information to the relay terminal device and the target terminal device (or described as a receiver terminal device or a second terminal device). When the target terminal device is a data sender (or described as a transmitter terminal device or a first terminal device), the target terminal device may determine the first identifier and the corresponding SLRB configuration information, and send the first identifier and the SLRB configuration information to the relay terminal device and the source terminal device (or described as a receiver terminal device or a second terminal device).

For example, the first terminal device may determine the first identifier based on the SLRB configuration information by using any one of the following three possible designs:
In a first possible design, for example, the first identifier is a radio bearer identifier, the SLRB configuration information may include a PC5 configuration index, and the first terminal device may determine the radio bearer identifier based on the PC5 configuration index.

The PC5 configuration index may indicate end-to-end (end-to-end, E2E) SLRB configuration information between the first terminal device and the second terminal device, and a length of the PC5 configuration index is nine bits.

In a first example, the first terminal device may determine the radio bearer identifier based on a quantity of PC5 configuration indexes.

A quantity of radio bearer identifiers is equal to the quantity of PC5 configuration indexes, a value of a 1^{st} radio bearer identifier is a first value, and a difference between two adjacent radio bearer identifiers is a second value.

Optionally, the first value is 0, 1, or a specific first value, and the second value is 1, 2, or a specific second value. The first value and the second value may be customized by the first terminal device, or may be preconfigured. This is not limited.

For example, if the first value is 1 and the second value is 1, the radio bearer identifier may be increased by 1 starting from 1, and the radio bearer identifier is in one-to-one correspondence with the PC5 configuration index.

In a second example, the first terminal device may determine the radio bearer identifier based on five least significant bits of the PC5 configuration index.

In a third example, the first terminal device may determine a result of performing a modulo operation on the PC5 configuration index and 32 as the radio bearer identifier.

The first terminal device may determine a remainder of the PC5 configuration index modulo 32 as the radio bearer identifier, or the first terminal device may determine a value obtaining by adding 1 to the remainder of the PC5 configuration index modulo 32 as the radio bearer identifier.

In a second possible design, for example, the first identifier is a PC5 configuration index, the SLRB configuration information may include the PC5 configuration index, and the first terminal device may determine the PC5 configuration index as the first identifier based on the SLRB configuration information.

Optionally, the PC5 configuration index is nine bits, and the first identifier may be nine bits of the PC5 configuration index, or may be five least significant bits of the PC5 configuration index. This is not limited.

In a third possible design, for example, the first identifier is a logical channel identifier, the SLRB configuration information may include the logical channel identifier, and the first terminal device may determine the logical channel identifier as the first identifier based on the SLRB configuration information.

The logical channel identifier may indicate an E2E logical channel identifier between the first terminal device and the second terminal device.

Optionally, the logical channel identifier is six bits, and the first identifier may be six bits of the logical channel identifier, or may be five least significant bits of the logical channel identifier. This is not limited.

Optionally, the first terminal device encrypts data by using an LCID corresponding to an E2E PDCP, and after receiving the data, the second terminal device may directly decrypt the PDCP based on the logical channel identifier carried in an SRAP header.

Based on the foregoing three possible designs, if a first identifier associated with first SLRB configuration information is the same as a first identifier associated with second SLRB configuration information, the first terminal device may adjust, in any one of the following three manners, the first identifier associated with the second SLRB configuration information, so that the first identifier associated with the second SLRB configuration information is different from the first identifier associated with the first SLRB configuration information:
Manner 1: The first terminal device determines a sum of a value of the first identifier associated with the second SLRB configuration information and a third value as the first identifier associated with the second SLRB configuration information.
Manner 2: The first terminal device determines a difference between the value of the first identifier associated with the second SLRB configuration information and the third value as the first identifier associated with the second SLRB configuration information.

In the foregoing two manners, the third value may be 1, 2, or a specific third value. The third value may be customized by the first terminal device, or may be preset. This is not limited.

Manner 3: The first terminal device determines a value that is in a value set and that is not associated with SLRB configuration information as the first identifier associated with the second SLRB configuration information.

For example, the value set may be [0, 31].

Optionally, the first terminal device may sequentially select, in an order of values, values that are in the value set and that are not associated with SLRB configuration information, and determine the values as the first identifiers associated with the second SLRB configuration information.

Based on the foregoing descriptions of the first identifier, optionally, when the first identifier is the radio bearer identifier, the first identifier may be five bits or six bits; when the first identifier is the PC5 configuration index, the first identifier may be nine bits or five bits; or when the first identifier is the logical channel identifier, the first identifier may be five bits or six bits.

Optionally, when sending data to the second terminal device via the relay terminal device, the first terminal device may include the first identifier in the SRAP header.

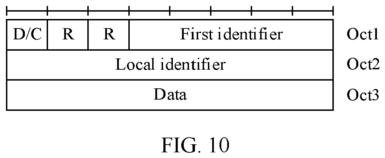

For example, the first terminal device may reuse an SRAP header format in an R17 U2N relay scenario. To be specific, as shown in FIG. 10, the SRAP header may include a first identifier and a local identifier.

Based on the foregoing descriptions of the radio bearer, the radio bearer identifier may include a data radio bearer identifier (DRB ID) and a signaling radio bearer identifier (SRB ID). In U2U, a value of the signaling radio bearer identifier may be 0 to 3, and a value of the data radio bearer identifier may be 1 to 32. In other words, the value of the signaling radio bearer identifier and the value of the data radio bearer identifier may be set to a same value, or may be set to different values.

In a first example, an example in which the value of the signaling radio bearer identifier and the value of the data radio bearer identifier may be set to a same value (for example, the data includes some values in 0 to 3) is used. A logical channel in the following manner 1 may be used for differentiation, or first indication information in the following manner 2 may be used for differentiation.

Manner 1: For a signaling radio bearer, a specific RLC channel (or described as a logical channel) may be used for transmission. After receiving the data, terminal devices (including the relay terminal device and the second terminal device) that receive the data may have the following two determining logics:
1. After receiving the data, the terminal device that receives the data may first determine, based on the value of the radio bearer identifier in the SRAP header, whether the radio bearer is the data radio bearer or the signaling radio bearer. If the radio bearer cannot be determined, the terminal device determines, based on a logical channel from which the data comes, whether the radio bearer is the data radio bearer or the signaling radio bearer.
2. After receiving the data, the terminal device that receives the data may first determine, based on the logical channel, whether the radio bearer is the data radio bearer or the signaling radio bearer, and then check the value of the radio bearer identifier.

Manner 2: The first indication information indicates that the radio bearer identifier is the signaling radio bearer identifier, or the first indication information indicates that the radio bearer identifier is the data radio bearer identifier.

For example, the first indication information is one bit. A value of the first indication information may be set to 0 to indicate that the radio bearer identifier is the signaling radio bearer identifier, and the value of the first indication information is set to 1 to indicate that the radio bearer identifier is the data radio bearer identifier.

In a second example, an example in which the value of the signaling radio bearer identifier and the value of the data radio bearer identifier may be set to different values is used. The terminal device that receives the data may directly distinguish, by using the value of the radio bearer identifier, whether the radio bearer identifier is the data radio bearer identifier or the signaling radio bearer identifier.

For example, if the value of the radio bearer identifier belongs to a first set, the radio bearer identifier is the data radio bearer identifier; or if the value of the radio bearer identifier belongs to a second set, the radio bearer identifier is the signaling radio bearer identifier.

Because the data radio bearer identifier may occupy a maximum of five bits, there is no space left for allocating the value of the signaling radio bearer identifier. In this case, there may be the following two possible implementations.

Implementation 1: The first terminal device configures the radio bearer identifier by using six bits, to ensure that the values of the data radio bearer identifier and the signaling radio bearer identifier are not repeated.

A quantity of values of the signaling radio bearer identifier is less than or equal to 4, and a quantity of values of the data radio bearer identifier is less than or equal to 32.

Implementation 2: When determining the value of the radio bearer identifier, the first terminal device controls a total quantity of values of the control signaling radio bearer identifier and the data radio bearer identifier not to exceed five bits (in other words, the total quantity is less than or equal to 32), where a quantity of values of the signaling radio bearer identifier is less than or equal to 4, and a quantity of values of the data radio bearer identifier is less than or equal to 28.

Step 902: The first terminal device sends first information to the relay terminal device, and correspondingly, the relay terminal device receives the first information from the first terminal device.

Step 903: The first terminal device sends the first information to the second terminal device via the relay terminal device, and correspondingly, the second terminal device receives the first information from the first terminal device via the relay terminal device.

The first information may include one or more first identifiers and SLRB configuration information associated with the first identifier, and different first identifiers are associated with different SLRB configuration information.

Optionally, the first terminal device sends the first information to the relay terminal device by using an SL-RRC message.

Optionally, the first terminal device includes the first information in the SL-RRC message, and sends the SL-RRC message to the second terminal device via the relay terminal device.

For example, an SLRB configuration addition list (slrb-ConfigToAddModList) in the SL-RRC message may include one or more pieces of SLRB configuration information (SLRB-Config). The SLRB configuration information includes a PC5 configuration index and a logical channel identifier. The first terminal device may determine the first identifier based on the SLRB configuration information, and include the corresponding first identifier in the SLRB configuration information.

Optionally, the first information further includes first indication information. The first indication information indicates that the radio bearer identifier is a signaling radio bearer identifier, or the first indication information indicates that the radio bearer identifier is a data radio bearer identifier. The relay terminal device and the second terminal device may distinguish between the data radio bearer identifier and the signaling radio bearer identifier based on the first indication information.

Optionally, the relay terminal device and the second terminal device may further distinguish between the data radio bearer identifier and the signaling radio bearer identifier based on a value of the radio bearer identifier. For example, if the value of the radio bearer identifier belongs to the first set, the radio bearer identifier is the data radio bearer identifier; or if the value of the radio bearer identifier belongs to the second set, the radio bearer identifier is the signaling radio bearer identifier.

Based on the method shown in FIG. 9, the first terminal device may determine the radio bearer identifier, and send an association relationship between the radio bearer identifier and the SLRB configuration information to the relay terminal device and the second terminal device, so that when performing data transmission, the first terminal device, the relay terminal device, or the second terminal device can correctly complete data delivery based on the association relationship, implementing bearer multiplexing and demultiplexing functions of an SRAP layer.

In addition, for the first identifier, compared with the PC5 configuration index, the radio bearer identifier and the logical channel identifier may occupy fewer bits, and the SRAP header format in the U2N relay scenario may be reused. Compared with the PC5 configuration index and the radio bearer identifier, the logical channel identifier may further implement E2E PDCP encryption and decryption, improving security of unicast communication.

Different from the first terminal device sending the first information to the relay terminal device and the second terminal device in FIG. 9, the first terminal device may send second information to the relay terminal device, and send third information to the second terminal device.

The second information may include one or more first identifiers and first configuration information associated with the first identifier, and different first identifiers are associated with different first configuration information. The third information may include one or more first identifiers and second configuration information associated with the first identifier, and different first identifiers are associated with different second configuration information.

The first configuration information may include one or more of the following: SRAP configuration information, RLC configuration information, MAC configuration information, and PHY configuration information. Alternatively, the first configuration information may include configuration information of an SRAP layer and a layer below the SRAP layer in the SLRB configuration information.

The second configuration information may include one or more of the following: SDAP configuration information and PDCP configuration information. Alternatively, the second configuration information may include configuration information of a layer above the SRAP layer in the SLRB configuration information.

The first terminal device may directly send the second information to the relay terminal device, and the relay terminal device determines an association relationship between the first identifier and the first configuration information based on the second information. The first terminal device may send the third information to the second terminal device via the relay terminal device. In other words, the first terminal device sends the third information to the relay terminal device, and the relay terminal device sends the third information to the second terminal device.

Optionally, the first terminal device sends the second information to the relay terminal device by using an SL-RRC message.

Optionally, the first terminal device includes the third information in the SL-RRC message, and sends the SL-RRC message to the second terminal device via the relay terminal device.

Optionally, the second information further includes first indication information.

Optionally, the third information further includes first indication information.

The first indication information indicates that the radio bearer identifier is a signaling radio bearer identifier, or the first indication information indicates that the radio bearer identifier is a data radio bearer identifier. The relay terminal device and the second terminal device may distinguish between the data radio bearer identifier and the signaling radio bearer identifier based on the first indication information.

Different from the first terminal device sending the second information to the relay terminal device and sending the third information to the second terminal device, the first terminal device may send the first information to the relay terminal device and send the third information to the second terminal device.

The first information may include one or more first identifiers and SLRB configuration information associated with the first identifier, and different first identifiers are associated with different SLRB configuration information. The third information may include one or more first identifiers and second configuration information associated with the first identifier, and different first identifiers are associated with different second configuration information.

The SLRB configuration information may include one or more of the following: SDAP configuration information, PDCP configuration information, SRAP configuration information, RLC configuration information, MAC configuration information, and PHY configuration information. The second configuration information may include one or more of the following: SDAP configuration information and PDCP configuration information. Alternatively, the second configuration information may include configuration information of a layer above the SRAP layer in the SLRB configuration information.

For detailed descriptions of the first information and the third information, refer to the foregoing descriptions of the first information and the third information. Details are not described again.

Optionally, when the first terminal device sends the third information to the second terminal device, in a possible design, the first terminal device sends the third information to the relay terminal device, and the relay terminal device sends the third information to the second terminal device. In another possible design, the first terminal device sends the first information to the relay terminal device, and the relay terminal device determines the third information based on the first information, and sends the third information to the second terminal device.

Based on the foregoing related descriptions of the first identifier and the SLRB configuration information/first configuration information/second configuration information associated with the first identifier, during data transmission, the first terminal device can correctly complete data delivery based on the first identifier and the SLRB configuration information associated with the first identifier, the relay terminal device can also correctly complete data delivery based on the first identifier and the SLRB configuration information/first configuration information associated with the first identifier, and the second terminal device can also correctly complete data delivery based on the first identifier and the SLRB configuration information/second configuration information associated with the first identifier, implementing the bearer multiplexing and demultiplexing functions of the SRAP layer.

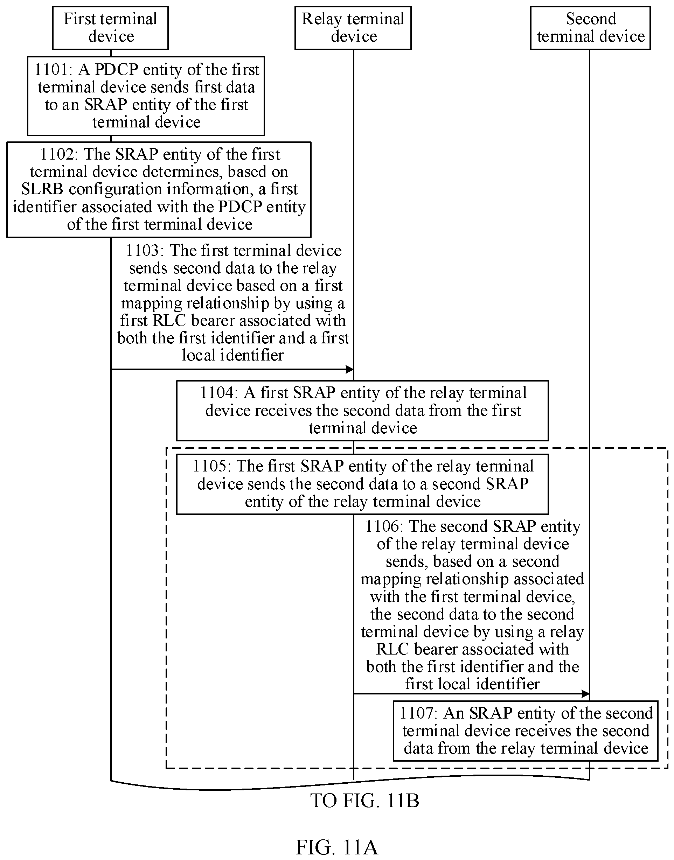

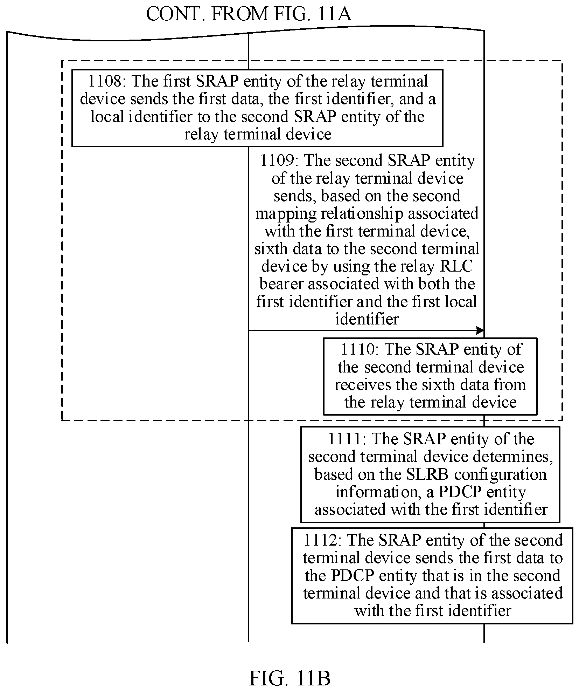

The following uses the first identifier and the SLRB configuration information associated with the first identifier as an example. As shown in FIG. 11A and FIG. 11B, during data transmission, the first terminal device, the relay terminal device, and the second terminal device can correctly complete data delivery based on the first identifier and the SLRB configuration information associated with the first identifier, implementing the bearer multiplexing and demultiplexing functions of the SRAP layer.

FIG. 11A and FIG. 11B show a communication method according to an embodiment of this application. In FIG. 11A and FIG. 11B, a data transmission process is described in detail by using an example in which a first terminal device sends first data to a second terminal device via a relay terminal device. As shown in FIG. 11A and FIG. 11B, the method may include the following steps.

Step 1101: A PDCP entity of the first terminal device sends the first data to an SRAP entity of the first terminal device, and correspondingly, the SRAP entity of the first terminal device receives the first data from the PDCP entity of the first terminal device.

For the first data sent by the first terminal device to the second terminal device, the SRAP entity of the first terminal device may receive a PDCP PDU (namely, the first data) from an upper-layer PDCP entity, and each PDCP entity may correspond to a radio bearer of a second terminal device.

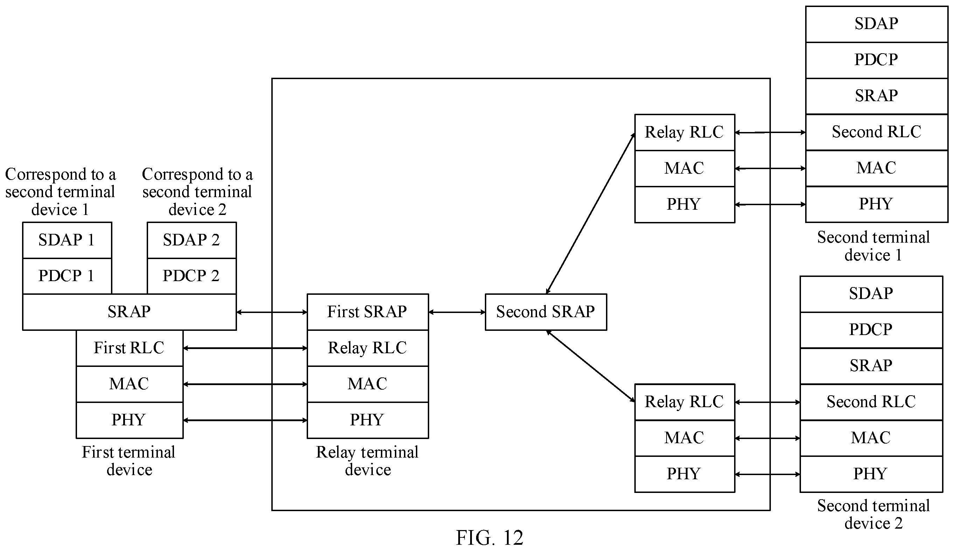

For example, as shown in FIG. 12, the first terminal device includes an SDAP entity 1, an SDAP entity 2, a PDCP entity 1, and a PDCP entity 2. The SDAP entity 1 and the PDCP entity 1 may correspond to a radio bearer of a second terminal device 1, and the SDAP entity 2 and the PDCP entity 2 may correspond to a radio bearer of a second terminal device 2. To be specific, the SRAP entity of the first terminal device may receive, from the PDCP entity 1 of the first terminal device, first data 1 that needs to be sent to the second terminal device 1, and receive, from the PDCP entity 2 of the first terminal device, first data 2 that needs to be sent to the second terminal device 2.

Step 1102: The SRAP entity of the first terminal device determines, based on SLRB configuration information, a first identifier associated with the PDCP entity of the first terminal device.

The first identifier may be a radio bearer identifier, or the first identifier may be a PC5 configuration index, or the first identifier may be a logical channel identifier.

The SLRB configuration information may include a PDCP configuration. The SRAP entity of the first terminal device may determine, based on the SLRB configuration information and the PDCP entity corresponding to the first data, the first identifier associated with the PDCP entity.

Step 1103: The first terminal device sends second data to the relay terminal device based on a first mapping relationship by using a first RLC bearer associated with both the first identifier and a first local identifier.

The first local identifier indicates the second terminal device. The first mapping relationship includes a mapping relationship among the first identifier, the first local identifier, and the first RLC bearer. The second data includes the first data, the first identifier, and the first local identifier.

After receiving the PDCP PDU (namely, the first data) delivered by the PDCP entity of the first terminal device, the SRAP entity of the first terminal device may include the first local identifier and the first identifier in an added SRAP header when constructing an SRAP PDU (namely, the second data), that is, may include, in the SRAP header, an identifier (namely, the first local identifier) of the second terminal device to which the PDCP entity belongs and the first identifier, to map bearers of different second terminal devices to corresponding first RLC bearers based on the first mapping relationship, that is, to deliver the second data to the corresponding first RLC bearer, and send the second data to the relay terminal device by using the first RLC bearer.

Optionally, the first terminal device determines the first mapping relationship based on a transmission requirement between the first terminal device and the relay terminal device.

The transmission requirement may include a QoS requirement between the first terminal device and the relay terminal device, for example, may include a transmission delay requirement and a transmission rate requirement. This is not limited.

Optionally, the first mapping relationship may alternatively be determined by a serving base station of the first terminal device based on the transmission requirement between the first terminal device and the relay terminal device. This is not limited.

Optionally, the first terminal device sends, to the relay terminal device, the first local identifier and a layer-2 identifier that is of the second terminal device and that is associated with the first local identifier, so that after receiving the second data, the relay terminal device determines, based on the first local identifier, a specific second terminal device that receives the first data.

For example, as shown in FIG. 12, the first RLC bearer of the first terminal device may deliver the second data to a MAC entity of the first terminal device, and the MAC entity of the first terminal device sends the second data to the relay terminal device through a physical layer.

Step 1104**:** A first SRAP entity of the relay terminal device receives the second data from the first terminal device.

The second data may include the first data, the first identifier, and the first local identifier.

For example, as shown in FIG. 12, a MAC entity of the relay terminal device may receive, through a physical layer, the second data sent by the first terminal device, and deliver the second data to a relay RLC bearer of the relay terminal device. A relay RLC entity of the relay terminal device delivers the second data to the first SRAP entity of the relay terminal device.

Optionally, the relay RLC bearer is an RLC bearer that is in the relay terminal device and that is associated with the first RLC bearer of the first terminal device.

Optionally, the second data received by the first SRAP entity of the relay terminal device may be an RLC SDU or an SRAP PDU. This is not limited.

Step 1105: The first SRAP entity of the relay terminal device sends the second data to a second SRAP entity of the relay terminal device, and correspondingly, the second SRAP entity of the relay terminal device receives the second data sent by the first SRAP entity of the relay terminal device.

The first SRAP entity of the relay terminal device may transparently transmit the received second data to the second SRAP entity of the relay terminal device without performing additional processing.

Step 1106: The second SRAP entity of the relay terminal device sends, based on a second mapping relationship associated with the first terminal device, the second data to the second terminal device by using a relay RLC bearer associated with both the first identifier and the first local identifier.

The second mapping relationship may include a mapping relationship among the first identifier, the first local identifier, and the relay RLC bearer.

Optionally, the relay RLC bearer is an RLC bearer that is in the relay terminal device and that is associated with a second RLC bearer of the second terminal device.

For example, as shown in FIG. 12, the second SRAP entity of the relay terminal device may deliver the second data to the relay RLC bearer associated with both the first identifier and the first local identifier, the relay RLC bearer delivers the second data to the MAC entity of the relay terminal device, and the MAC entity of the relay terminal device sends the second data to the second terminal device through the physical layer.

Optionally, the relay terminal device may store two sets of SRAP layer sending configurations based on different data transmission directions. After receiving data, the relay terminal device may first determine whether the data is from the first terminal device or the second terminal device, and then determine a set of configurations to be used. To be specific, if the data is from the first terminal device, the data is sent to the second terminal device by using the second mapping relationship associated with the first terminal device; or if the data is from the second terminal device, the data is sent to the first terminal device by using a third mapping relationship associated with the second terminal device.

The third mapping relationship may include a mapping relationship among the first identifier, a second local identifier, and the relay RLC bearer. The second local identifier may indicate the first terminal device.

Optionally, the relay terminal device determines the second mapping relationship based on a transmission requirement between the relay terminal device and the second terminal device.

The transmission requirement may include a QoS requirement between the relay terminal device and the second terminal device, for example, may include a transmission delay requirement and a transmission rate requirement. This is not limited.

Optionally, the second mapping relationship may alternatively be determined by a serving base station of the relay terminal device based on the transmission requirement between the relay terminal device and the second terminal device. This is not limited.

Step 1107: An SRAP entity of the second terminal device receives the second data from the relay terminal device.

The second data may include the first data, the first identifier, and the first local identifier.

For example, as shown in FIG. 12, a MAC entity of the second terminal device may receive, through a physical layer, the second data sent by the relay terminal device, and deliver the second data to the second RLC bearer of the second terminal device. A second RLC entity of the second terminal device delivers the second data to the SRAP entity of the second terminal device.

Optionally, the second RLC bearer is an RLC bearer that is in the second terminal device and that is associated with the relay RLC bearer of the relay terminal device.

Optionally, the second data received by the SRAP entity of the second terminal device may be an RLC SDU or an SRAP PDU. This is not limited.

Alternatively, step 1105 to step 1107 may be replaced with steps 1108 to 1110.

Step 1108: The first SRAP entity of the relay terminal device sends the first data, the first identifier, and a local identifier to the second SRAP entity of the relay terminal device.

The local identifier may include one or more of the following: the first local identifier and the second local identifier. The first local identifier indicates the second terminal device, and the second local identifier indicates the first terminal device.

When receiving the second data sent by the first terminal device, the first SRAP entity of the relay terminal device may remove an SRAP header of the second data, to obtain the first data, and deliver the first data to the second SRAP entity of the relay terminal device. The first SRAP entity of the relay terminal device may further parse the SRAP header of the second data to obtain the first identifier and the first local identifier, and indicate the first identifier and the first local identifier to the second SRAP entity of the relay terminal device.

Optionally, the first SRAP entity of the relay terminal device sends, to the second SRAP entity of the relay terminal device, the second local identifier that indicates the first terminal device, to indicate that a source terminal device of the first data is the first terminal device.

Step 1109: The second SRAP entity of the relay terminal device sends, based on the second mapping relationship associated with the first terminal device, sixth data to the second terminal device by using the relay RLC bearer associated with both the first identifier and the first local identifier.

The second mapping relationship may include a mapping relationship among the first identifier, the first local identifier, and the relay RLC bearer. The sixth data may include the first data, the first identifier, and the local identifier.

For descriptions of the second mapping relationship, refer to the descriptions of the second mapping relationship in step 1106. Details are not described again.

After receiving the first data, the first identifier, and the local identifier that are sent by the first SRAP entity of the relay terminal device, the second SRAP entity of the relay terminal device may include the local identifier and the first identifier in an added SRAP header when constructing an SRAP PDU (namely, the sixth data), and map bearers of different second terminal devices to corresponding relay RLC bearers based on the second mapping relationship, that is, to deliver the sixth data to the corresponding relay RLC bearer, and send the sixth data to the second terminal device by using the relay RLC bearer.

The second SRAP entity of the relay terminal device may include the first local identifier in the sixth data, to indicate that the first data is sent to the second terminal device, or the second SRAP entity of the relay terminal device may include the second local identifier in the sixth data, to indicate that a source terminal device of the first data is the first terminal device.

For example, when there are a plurality of first terminal devices and one second terminal device, the second local identifier may be carried in the sixth data, to indicate a specific first terminal device that is the source terminal device of the first data.

Step 1110: The SRAP entity of the second terminal device receives the sixth data from the relay terminal device.

The sixth data includes the first data, the first identifier, and the local identifier.

For example, as shown in FIG. 12, the MAC entity of the second terminal device may receive, through the physical layer, the six data sent by the relay terminal device, and deliver the sixth data to the second RLC bearer of the second terminal device. A second RLC entity of the second terminal device delivers the sixth data to the SRAP entity of the second terminal device.

Optionally, the second RLC bearer is an RLC bearer that is in the second terminal device and that is associated with the relay RLC bearer of the relay terminal device.

Optionally, the sixth data received by the SRAP entity of the second terminal device may be an RLC SDU or an SRAP PDU. This is not limited.

Optionally, when the sixth data includes the second local identifier, the second terminal device determines, based on the second local identifier, that a source terminal device of the first data is the first terminal device.

Step 1111: The SRAP entity of the second terminal device determines, based on the SLRB configuration information, a PDCP entity associated with the first identifier.

Step 1112: The SRAP entity of the second terminal device sends the first data to the PDCP entity that is in the second terminal device and that is associated with the first identifier.

The SLRB configuration information may include a PDCP configuration, and the SRAP entity of the second terminal device may determine, based on the SLRB configuration information and the first identifier, the PDCP entity associated with the first identifier.

Based on the method shown in FIG. 11A and FIG. 11B, to support the SRAP layer and the U2U relay protocol architecture, a design of the SRAP layer and a bearer configuration solution of the terminal device are provided, and a routing procedure for sending data by the first terminal device to the second terminal device is provided, so that the first terminal device can correctly deliver the first data to the second terminal device.

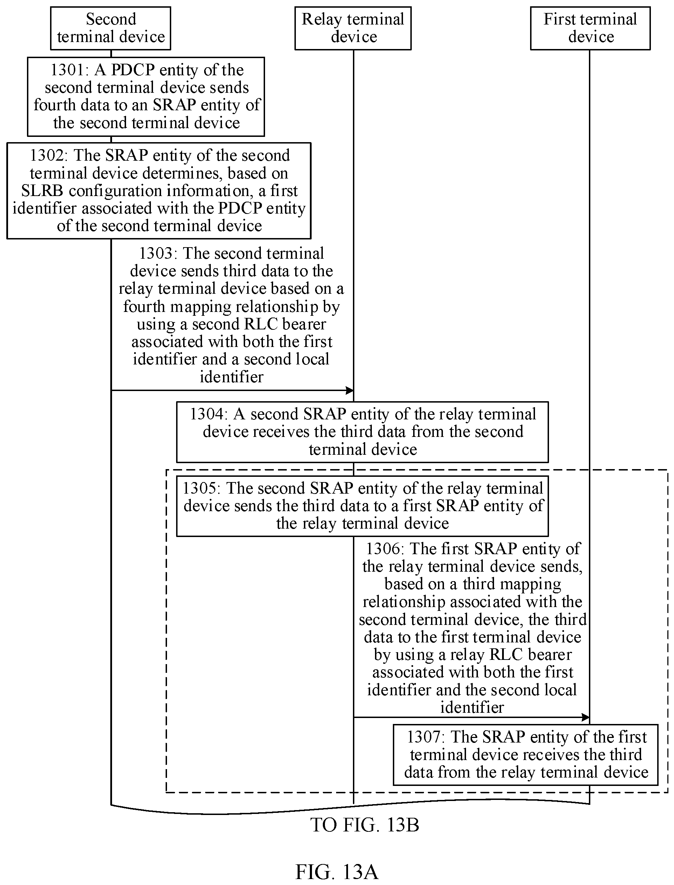

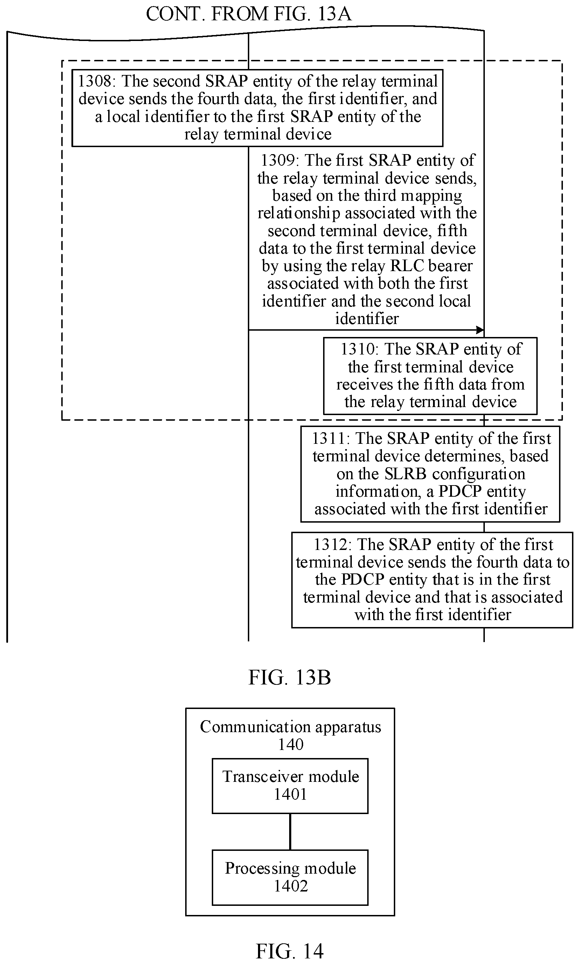

Similar to FIG. 11A and FIG. 11B in which the first terminal device sends the first data to the second terminal device via the relay terminal device, referring to FIG. 13A and FIG. 13B, an example in which the second terminal device sends fourth data to the first terminal device via the relay terminal device is used to describe in detail a data transmission process.

FIG. 13A and FIG. 13B show a communication method according to an embodiment of this application. As shown in FIG. 13A and FIG. 13B, the method may include the following steps.

Step 1301: A PDCP entity of a second terminal device sends fourth data to an SRAP entity of the second terminal device, and correspondingly, the SRAP entity of the second terminal device receives the fourth data from the PDCP entity of the second terminal device.

For the fourth data sent by the second terminal device to the first terminal device, the SRAP entity of the second terminal device may receive a PDCP PDU (namely, the fourth data) from an upper-layer PDCP entity, and each PDCP entity may correspond to a radio bearer of a first terminal device.

Step 1302: The SRAP entity of the second terminal device determines, based on SLRB configuration information, a first identifier associated with the PDCP entity of the second terminal device.

The first identifier may be a radio bearer identifier, or the first identifier may be a PC5 configuration index, or the first identifier may be a logical channel identifier.

The SLRB configuration information may include a PDCP configuration, and the SRAP entity of the second terminal device may determine, based on the SLRB configuration information and the PDCP entity corresponding to the fourth data, the first identifier associated with the PDCP entity.

Step 1303: The second terminal device sends third data to a relay terminal device based on a fourth mapping relationship by using a second RLC bearer associated with both the first identifier and a second local identifier.

The second local identifier indicates the first terminal device. The fourth mapping relationship includes a mapping relationship among the first identifier, the second local identifier, and the second RLC bearer. The third data includes the fourth data, the first identifier, and the second local identifier.

After receiving the PDCP PDU (namely, the fourth data) delivered by the PDCP entity of the second terminal device, the SRAP entity of the second terminal device may include the second local identifier and the first identifier in an added SRAP header when constructing an SRAP PDU (namely, the third data), that is, may include, in the SRAP header, an identifier (namely, the second local identifier) of the first terminal device to which the PDCP entity belongs and the first identifier, to map bearers of different first terminal devices to corresponding second RLC bearers based on the fourth mapping relationship, that is, to deliver the third data to the corresponding second RLC bearer, and send the third data to the relay terminal device by using the second RLC bearer.

Optionally, the second terminal device determines the fourth mapping relationship based on a transmission requirement between the second terminal device and the relay terminal device.

The transmission requirement may include a QoS requirement between the second terminal device and the relay terminal device, for example, may include a transmission delay requirement and a transmission rate requirement. This is not limited.

Optionally, the fourth mapping relationship may alternatively be determined by a serving base station of the second terminal device based on the transmission requirement between the second terminal device and the relay terminal device. This is not limited.

Optionally, the second terminal device sends, to the relay terminal device, the second local identifier and a layer-2 identifier that is of the first terminal device and that is associated with the second local identifier, so that after receiving the third data, the relay terminal device determines, based on the second local identifier, a specific first terminal device that receives the fourth data.

For example, as shown in FIG. 12, the second RLC bearer of the second terminal device may deliver the third data to a MAC entity of the second terminal device, and the MAC entity of the second terminal device sends the third data to the relay terminal device through a physical layer.

Step 1304: A second SRAP entity of the relay terminal device receives the third data from the second terminal device.

The third data includes the fourth data, the first identifier, and the second local identifier.

For example, as shown in FIG. 12, a MAC entity of the relay terminal device may receive, through a physical layer, the third data sent by the second terminal device, and deliver the third data to a relay RLC bearer of the relay terminal device. A relay RLC entity of the relay terminal device delivers the third data to the second SRAP entity of the relay terminal device.

Optionally, the relay RLC bearer is an RLC bearer that is in the relay terminal device and that is associated with a second RLC bearer of the second terminal device.

Optionally, the third data received by the second SRAP entity of the relay terminal device may be an RLC SDU or an SRAP PDU. This is not limited.

Step 1305: The second SRAP entity of the relay terminal device sends the third data to a first SRAP entity of the relay terminal device.

The second SRAP entity of the relay terminal device may transparently transmit the received third data to the first SRAP entity of the relay terminal device without performing additional processing.

Step 1306: The first SRAP entity of the relay terminal device sends, based on a third mapping relationship associated with the second terminal device, the third data to the first terminal device by using a relay RLC bearer associated with both the first identifier and the second local identifier.

The third mapping relationship includes a mapping relationship among the first identifier, the second local identifier, and the relay RLC bearer.

Optionally, the relay RLC bearer is an RLC bearer that is in the relay terminal device and that is associated with a first RLC bearer of the first terminal device.

For example, as shown in FIG. 12, the first SRAP entity of the relay terminal device may deliver the third data to the relay RLC bearer associated with both the first identifier and the second local identifier, the relay RLC bearer delivers the third data to the MAC entity of the relay terminal device, and the MAC entity of the relay terminal device sends the third data to the first terminal device through the physical layer.

Optionally, the relay terminal device may store two sets of SRAP layer sending configurations based on different data transmission directions. After receiving data, the relay terminal device may first determine whether the data is from the first terminal device or the second terminal device, and then determine a set of configurations to be used. To be specific, if the data is from the first terminal device, the data is sent to the second terminal device by using the second mapping relationship associated with the first terminal device; or if the data is from the second terminal device, the data is sent to the first terminal device by using a third mapping relationship associated with the second terminal device.

Optionally, the relay terminal device determines the third mapping relationship based on a transmission requirement between the relay terminal device and the first terminal device.

The transmission requirement may include a QoS requirement between the relay terminal device and the first terminal device, for example, may include a transmission delay requirement and a transmission rate requirement. This is not limited.

Optionally, the third mapping relationship may alternatively be determined by a serving base station of the relay terminal device based on the transmission requirement between the relay terminal device and the first terminal device. This is not limited.

Optionally, the relay terminal device receives, from the first terminal device, the first local identifier and a layer-2 identifier that is of the second terminal device and that is associated with the first local identifier; or the relay terminal device receives, from the second terminal device, the second local identifier and a layer-2 identifier that is of the first terminal device and that is associated with the second local identifier.

Step 1307: An SRAP entity of the first terminal device receives the third data from the relay terminal device.

The third data includes the fourth data, the first identifier, and the second local identifier.

For example, as shown in FIG. 12, a MAC entity of the first terminal device may receive, through a physical layer, the third data sent by the relay terminal device, and deliver the third data to the first RLC bearer of the first terminal device. A first RLC entity of the first terminal device delivers the third data to the SRAP entity of the first terminal device.

Optionally, the first RLC bearer is an RLC bearer that is in the first terminal device and that is associated with the relay RLC bearer of the relay terminal device.

Optionally, the third data received by the SRAP entity of the first terminal device may be an RLC SDU or an SRAP PDU. This is not limited.

Alternatively, step 1305 to step 1307 may be replaced with steps 1308 to 1310.

Step 1308: The second SRAP entity of the relay terminal device sends the fourth data, the first identifier, and a local identifier to the first SRAP entity of the relay terminal device.

The local identifier includes one or more of the following: the first local identifier and the second local identifier, and the second local identifier indicates the first terminal device.

When receiving the third data sent by the second terminal device, the second SRAP entity of the relay terminal device may remove an SRAP header of the third data, to obtain the fourth data, and deliver the fourth data to the first SRAP entity of the relay terminal device. The second SRAP entity of the relay terminal device may further parse the SRAP header of the third data to obtain the first identifier and the second local identifier, and indicate the first identifier and the second local identifier to the first SRAP entity of the relay terminal device.

Optionally, the second SRAP entity of the relay terminal device sends, to the first SRAP entity of the relay terminal device, the first local identifier that indicates the second terminal device, to indicate that a source terminal device of the fourth data is the second terminal device.

Step 1309: The first SRAP entity of the relay terminal device sends, based on the third mapping relationship associated with the second terminal device, fifth data to the first terminal device by using the relay RLC bearer associated with both the first identifier and the second local identifier.

The third mapping relationship includes a mapping relationship among the first identifier, the second local identifier, and the relay RLC bearer; and the fifth data includes the fourth data, the first identifier, and the local identifier.

For descriptions of the third mapping relationship, refer to the descriptions of the third mapping relationship in step 1306. Details are not described again.

After receiving the fourth data, the first identifier, and the local identifier that are sent by the second SRAP entity of the relay terminal device, the first SRAP entity of the relay terminal device may include the local identifier and the first identifier in an added SRAP header when constructing an SRAP PDU (namely, the fifth data), and map bearers of different first terminal devices to corresponding relay RLC bearers based on the third mapping relationship, that is, deliver the fifth data to the corresponding relay RLC bearer, and send the fifth data to the first terminal device by using the relay RLC bearer.

The first SRAP entity of the relay terminal device may include the second local identifier in the fifth data, to indicate that the fourth data is sent to the first terminal device, or the first SRAP entity of the relay terminal device may include the first local identifier in the fifth data, to indicate that a source terminal device of the fourth data is the second terminal device.

For example, when there are a plurality of second terminal devices and one first terminal device, the first local identifier may be carried in the fifth data, to indicate a specific second terminal device that is the source terminal device of the fourth data.

Step 1310: The SRAP entity of the first terminal device receives the fifth data from the relay terminal device.

The fifth data includes the fourth data, the first identifier, and the local identifier.

For example, as shown in FIG. 12, the MAC entity of the first terminal device may receive, through the physical layer, the fifth data sent by the relay terminal device, and deliver the fifth data to the first RLC bearer of the first terminal device. The first RLC entity of the first terminal device delivers the fifth data to the SRAP entity of the first terminal device.

Optionally, the first RLC bearer is an RLC bearer that is in the first terminal device and that is associated with the relay RLC bearer of the relay terminal device.

Optionally, the fifth data received by the SRAP entity of the first terminal device may be an RLC SDU or an SRAP PDU. This is not limited.

Optionally, when the fifth data includes the first local identifier, the first terminal device determines, based on the first local identifier, that a source terminal device of the fourth data is the second terminal device.

Step 1311: The SRAP entity of the first terminal device determines, based on the SLRB configuration information, a PDCP entity associated with the first identifier.

Step 1312: The SRAP entity of the first terminal device sends the fourth data to the PDCP entity that is in the first terminal device and that is associated with the first identifier.

The SLRB configuration information may include a PDCP configuration, and the SRAP entity of the first terminal device may determine, based on the SLRB configuration information and the first identifier, the PDCP entity associated with the first identifier.

Based on the method shown in FIG. 13A and FIG. 13B, for supporting the SRAP layer and the U2U relay protocol architecture, a design of the SRAP layer and a bearer configuration solution of the terminal device are provided, and a routing procedure for sending data by the second terminal device to the first terminal device is provided, so that the second terminal device can correctly deliver the fourth data to the first terminal device.

It should be noted that the methods provided in embodiments of this application may be implemented separately, or may be implemented together. This is not limited.

It may be understood that, in embodiments of this application, an execution body may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 14 shows a communication apparatus 140. The communication apparatus 140 may perform actions performed by the first terminal device in FIG. 9 to FIG. 13B, or perform actions performed by the relay terminal device in FIG. 9 to FIG. 13B, or perform actions performed by the second terminal device in FIG. 9 to FIG. 13B.

The communication apparatus 140 may include a transceiver module 1401 and a processing module 1402. For example, the communication apparatus 140 may be a communication device, or may be a chip used in a communication device, or another combined device or component that has a function of the communication apparatus. When the communication apparatus 140 is a communication device, the transceiver module 1401 may be a transceiver. The transceiver may include an antenna, a radio frequency circuit, and the like. The processing module 1402 may be a processor (or a processing circuit), for example, a baseband processor. The baseband processor may include one or more CPUs. When the communication apparatus 140 is a component having a function of the communication apparatus, the transceiver module 1401 may be a radio frequency unit, and the processing module 1402 may be a processor (or a processing circuit), for example, a baseband processor. When the communication apparatus 140 is a chip system, the transceiver module 1401 may be an input/output interface of a chip (for example, a baseband chip); and the processing module 1402 may be a processor (or a processing circuit) of the chip system, and may include one or more central processing units. It should be understood that the transceiver module 1401 in this embodiment of this application may be implemented by a transceiver or a transceiver-related circuit component, and the processing module 1402 may be implemented by a processor or a processor-related circuit component (or referred to as a processing circuit).

For example, the transceiver module 1401 may be configured to perform all sending and receiving operations performed by the communication apparatus in the embodiments shown in FIG. 9 to FIG. 13B, and/or configured to support another process of the technology described in this specification. The processing module 1402 may be configured to perform all operations other than sending and receiving operations performed by the communication apparatus in the embodiments shown in FIG. 9 to FIG. 13B, and/or configured to support another process of the technology described in this specification.

In another possible implementation, the transceiver module 1401 in FIG. 14 may be replaced with a transceiver, and a function of the transceiver module 1401 may be integrated into the transceiver. The processing module 1402 may be replaced with a processor, and a function of the processing module 1402 may be integrated into the processor. Further, the communication apparatus 140 shown in FIG. 14 may further include a memory.

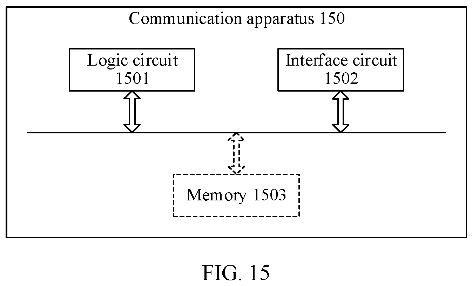

Alternatively, when the processing module 1402 is replaced with a processor, and the transceiver module 1401 is replaced with a transceiver, the communication apparatus 140 in this embodiment of this application may be a communication apparatus 150 shown in FIG. 15, where the processor may be a logic circuit 1501, and the transceiver may be an interface circuit 1502. Further, the communication apparatus 150 shown in FIG. 15 may further include a memory 1503.

An embodiment of this application further provides a computer program product. When the computer program product is executed by a computer, a function of any one of the foregoing method embodiments can be implemented.

An embodiment of this application further provides a computer program. When the computer program is executed by a computer, a function of any one of the foregoing method embodiments can be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmitting end and/or a data receiving end), for example, a hard disk or memory of the terminal. The computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more. "A plurality of" means two or more. "At least two (items)" means two, three, or more. "And/Or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when" and "if" mean that corresponding processing is performed in an objective situation, are not intended to limit time, do not require a determining action during implementation, and do not mean any other limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division. There may be another division manner during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
determining, by a first terminal device, a first identifier based on sidelink radio bearer SLRB configuration information, wherein the SLRB configuration information indicates an SLRB between the first terminal device and a second terminal device, the first identifier is a radio bearer identifier, and the radio bearer identifier indicates a radio bearer between the first terminal device and the second terminal device;
sending, by the first terminal device, first information to a relay terminal device, wherein the first information comprises one or more first identifiers and SLRB configuration information associated with the first identifier, and different first identifiers are associated with different SLRB configuration information; and
sending, by the first terminal device, the first information to the second terminal device via the relay terminal device.

2. The method according to claim 1, wherein the determining, by a first terminal device, a first identifier based on SLRB configuration information comprises:
the SLRB configuration information comprises a PC5 configuration index; and
determining, by the first terminal device, the radio bearer identifier based on the PC5 configuration index.

3. The method according to claim 2, wherein the determining, by the first terminal device, the radio bearer identifier based on the PC5 configuration index comprises:
determining, by the first terminal device, the radio bearer identifier based on a quantity of PC5 configuration indexes, wherein a quantity of radio bearer identifiers is equal to the quantity of PC5 configuration indexes, a value of a 1^{st} radio bearer identifier is a first value, and a difference between two adjacent radio bearer identifiers is a second value; or
determining, by the first terminal device, the radio bearer identifier based on five least significant bits of the PC5 configuration index; or
determining, by the first terminal device, a result of performing a modulo operation on the PC5 configuration index and 32 as the radio bearer identifier.

4. The method according to claim 3, wherein if a first identifier associated with first SLRB configuration information is the same as a first identifier associated with second SLRB configuration information, the method further comprises:
determining, by the first terminal device, a sum of a value of the first identifier associated with the second SLRB configuration information and a third value as the first identifier associated with the second SLRB configuration information; or
determining, by the first terminal device, a difference between the value of the first identifier associated with the second SLRB configuration information and the third value as the first identifier associated with the second SLRB configuration information; or
determining, by the first terminal device, a value that is in a value set and that is not associated with SLRB configuration information as the first identifier associated with the second SLRB configuration information.

5. The method according to any one of claims 1 to 4, wherein
the first identifier is five bits; or
the first identifier is six bits.

6. The method according to any one of claims 1 to 5, wherein the method further comprises:
the first information further comprises first indication information, wherein the first indication information indicates that the radio bearer identifier is a signaling radio bearer identifier, or the first indication information indicates that the radio bearer identifier is a data radio bearer identifier; or
if a value of the radio bearer identifier belongs to a first set, the radio bearer identifier is a data radio bearer identifier; or if the value of the radio bearer identifier belongs to a second set, the radio bearer identifier is a signaling radio bearer identifier.

7. The method according to any one of claims 1 to 6, wherein the method further comprises:
receiving, by a sidelink relay adaptation protocol SRAP entity of the first terminal device, first data from a packet data convergence protocol PDCP entity of the first terminal device;
determining, by the SRAP entity of the first terminal device based on the SLRB configuration information, a first identifier associated with the PDCP entity of the first terminal device, wherein the first identifier is the radio bearer identifier, or the first identifier is a PC5 configuration index, or the first identifier is a logical channel identifier; and
sending, by the first terminal device based on a first mapping relationship, second data to the relay terminal device by using a first radio link control RLC bearer associated with the first identifier and a first local identifier, wherein the first local identifier indicates the second terminal device, the first mapping relationship comprises a mapping relationship among the first identifier, the first local identifier, and the first RLC bearer, and the second data comprises the first data, the first identifier, and the first local identifier.

8. The method according to claim 7, wherein the method further comprises:
determining, by the first terminal device, the first mapping relationship based on a transmission requirement between the first terminal device and the relay terminal device.

9. The method according to claim 7 or 8, wherein the method further comprises:
sending, by the first terminal device to the relay terminal device, the first local identifier and a layer-2 identifier that is of the second terminal device and that is associated with the first local identifier.

10. The method according to any one of claims 1 to 9, wherein the method further comprises:
receiving, by the SRAP entity of the first terminal device, third data from the relay terminal device, wherein the third data comprises fourth data, a first identifier, and a second local identifier; the second local identifier indicates the first terminal device; and the first identifier is the radio bearer identifier, or the first identifier is a PC5 configuration index, or the first identifier is a logical channel identifier;
determining, by the SRAP entity of the first terminal device based on the SLRB configuration information, the PDCP entity associated with the first identifier; and
sending, by the SRAP entity of the first terminal device, the fourth data to the PDCP entity that is in the first terminal device and that is associated with the first identifier.

11. The method according to any one of claims 1 to 9, wherein the method further comprises:
receiving, by the SRAP entity of the first terminal device, fifth data from the relay terminal device, wherein the fifth data comprises fourth data, a first identifier, and a local identifier; the local identifier comprises one or more of the following: the first local identifier and a second local identifier; the first local identifier indicates the second terminal device; the second local identifier indicates the first terminal device; and the first identifier is the radio bearer identifier, or the first identifier is a PC5 configuration index, or the first identifier is a logical channel identifier;
determining, by the SRAP entity of the first terminal device based on the SLRB configuration information, the PDCP entity associated with the first identifier; and
sending, by the SRAP entity of the first terminal device, the fourth data to the PDCP entity that is in the first terminal device and that is associated with the first identifier.

12. The method according to claim 11, wherein the method further comprises:
determining, by the first terminal device based on the first local identifier, that a source terminal device of the fourth data is the second terminal device.

13. A communication method, comprising:
receiving, by a relay terminal device, first information from a first terminal device, wherein the first information comprises one or more first identifiers and sidelink radio bearer SLRB configuration information associated with the first identifier, different first identifiers are associated with different SLRB configuration information, the SLRB configuration information indicates an SLRB between the first terminal device and a second terminal device, the first identifier is a radio bearer identifier, and the radio bearer identifier indicates a radio bearer between the first terminal device and the second terminal device; and
sending, by the relay terminal device, the first information to the second terminal device.

14. The method according to claim 13, wherein
the first identifier is five bits; or
the first identifier is six bits.

15. The method according to claim 13 or 14, wherein the method further comprises:
the first information further comprises first indication information, wherein the first indication information indicates that the radio bearer identifier is a signaling radio bearer identifier, or the first indication information indicates that the radio bearer identifier is a data radio bearer identifier; or
if a value of the radio bearer identifier belongs to a first set, the radio bearer identifier is a data radio bearer identifier; or if the value of the radio bearer identifier belongs to a second set, the radio bearer identifier is a signaling radio bearer identifier.

16. The method according to any one of claims 13 to 15, wherein the method further comprises:
receiving, by a first sidelink relay adaptation protocol SRAP entity of the relay terminal device, second data from the first terminal device, wherein the second data comprises first data, a first identifier, and a first local identifier; the first local identifier indicates the second terminal device; and the first identifier is the radio bearer identifier, or the first identifier is a PC5 configuration index, or the first identifier is a logical channel identifier;
sending, by the first SRAP entity of the relay terminal device, the second data to a second SRAP entity of the relay terminal device; and
sending, by the second SRAP entity of the relay terminal device based on a second mapping relationship associated with the first terminal device, the second data to the second terminal device by using a relay radio link control RLC bearer associated with both the first identifier and the first local identifier, wherein the second mapping relationship comprises a mapping relationship among the first identifier, the first local identifier, and the relay RLC bearer.

17. The method according to any one of claims 13 to 15, wherein the method further comprises:
receiving, by a first SRAP entity of the relay terminal device, second data from the first terminal device, wherein the second data comprises first data, a first identifier, and a first local identifier; the first local identifier indicates the second terminal device; and the first identifier is the radio bearer identifier, or the first identifier is a PC5 configuration index, or the first identifier is a logical channel identifier;
sending, by the first SRAP entity of the relay terminal device, the first data, the first identifier, and a local identifier to a second SRAP entity of the relay terminal device, wherein the local identifier comprises one or more of the following: the first local identifier and a second local identifier; and the second local identifier indicates the first terminal device; and
sending, by the second SRAP entity of the relay terminal device based on a second mapping relationship associated with the first terminal device, sixth data to the second terminal device by using a relay RLC bearer associated with both the first identifier and the first local identifier, wherein the second mapping relationship comprises a mapping relationship among the first identifier, the first local identifier, and the relay RLC bearer; and the sixth data comprises the first data, the first identifier, and the local identifier.

18. The method according to claim 16 or 17, wherein
the relay terminal device determines the second mapping relationship based on a transmission requirement between the relay terminal device and the second terminal device.

19. The method according to any one of claims 13 to 18, wherein the method further comprises:
receiving, by the second SRAP entity of the relay terminal device, third data from the second terminal device, wherein the third data comprises fourth data, a first identifier, and the second local identifier; the second local identifier indicates the first terminal device; and the first identifier is the radio bearer identifier, or the first identifier is a PC5 configuration index, or the first identifier is a logical channel identifier;
sending, by the second SRAP entity of the relay terminal device, the third data to the first SRAP entity of the relay terminal device; and
sending, by the first SRAP entity of the relay terminal device based on a third mapping relationship associated with the second terminal device, the third data to the first terminal device by using a relay RLC bearer associated with both the first identifier and the second local identifier, wherein the third mapping relationship comprises a mapping relationship among the first identifier, the second local identifier, and the relay RLC bearer.

20. The method according to any one of claims 13 to 18, wherein the method further comprises:
receiving, by the second SRAP entity of the relay terminal device, third data from the second terminal device, wherein the third data comprises fourth data, a first identifier, and the second local identifier; the second local identifier indicates the first terminal device; and the first identifier is the radio bearer identifier, or the first identifier is a PC5 configuration index, or the first identifier is a logical channel identifier;
sending, by the second SRAP entity of the relay terminal device, the fourth data, the first identifier, and a local identifier to the first SRAP entity of the relay terminal device, wherein the local identifier comprises one or more of the following: the first local identifier and the second local identifier; and the second local identifier indicates the first terminal device; and
sending, by the first SRAP entity of the relay terminal device based on a third mapping relationship associated with the second terminal device, fifth data to the first terminal device by using a relay RLC bearer associated with both the first identifier and the second local identifier, wherein the third mapping relationship comprises a mapping relationship among the first identifier, the second local identifier, and the relay RLC bearer; and the fifth data comprises the fourth data, the first identifier, and the local identifier.

21. The method according to claim 19 or 20, wherein
the relay terminal device determines the third mapping relationship based on a transmission requirement between the relay terminal device and the first terminal device.

22. The method according to any one of claims 16 to 21, wherein the method further comprises:
receiving, by the relay terminal device from the first terminal device, the first local identifier and a layer-2 identifier that is of the second terminal device and that is associated with the first local identifier; and
receiving, by the relay terminal device from the second terminal device, the second local identifier and a layer-2 identifier that is of the first terminal device and that is associated with the second local identifier.

23. A communication method, comprising:
receiving, by a second terminal device, first information from a first terminal device via a relay terminal device, wherein the first information comprises one or more first identifiers and sidelink radio bearer SLRB configuration information associated with the first identifier, different first identifiers are associated with different SLRB configuration information, the SLRB configuration information indicates an SLRB between the first terminal device and the second terminal device, the first identifier is a radio bearer identifier, and the radio bearer identifier indicates a radio bearer between the first terminal device and the second terminal device; and
determining, by the second terminal device, an association relationship between the first identifier and the SLRB configuration information based on the first information.

24. The method according to claim 23, wherein
the first identifier is five bits; or
the first identifier is six bits.

25. The method according to claim 23 or 24, wherein the method further comprises:
the first information further comprises first indication information, wherein the first indication information indicates that the radio bearer identifier is a signaling radio bearer identifier, or the first indication information indicates that the radio bearer identifier is a data radio bearer identifier; or
if a value of the radio bearer identifier belongs to a first set, the radio bearer identifier is a data radio bearer identifier; or if the value of the radio bearer identifier belongs to a second set, the radio bearer identifier is a signaling radio bearer identifier.

26. The method according to any one of claims 23 to 25, wherein the method further comprises:
receiving, by a sidelink relay adaptation protocol SRAP entity of the second terminal device, second data from the relay terminal device, wherein the second data comprises first data, a first identifier, and a first local identifier; the first local identifier indicates the second terminal device; and the first identifier is the radio bearer identifier, or the first identifier is a PC5 configuration index, or the first identifier is a logical channel identifier;
determining, by the SRAP entity of the second terminal device based on the SLRB configuration information, a packet data convergence protocol PDCP entity associated with the first identifier; and
sending, by the SRAP entity of the second terminal device, the first data to the PDCP entity that is in the second terminal device and that is associated with the first identifier.

27. The method according to any one of claims 23 to 25, wherein the method further comprises:
receiving, by the SRAP entity of the second terminal device, sixth data from the relay terminal device, wherein the sixth data comprises first data, a first identifier, and a local identifier; the local identifier comprises one or more of the following: a first local identifier and a second local identifier; the first local identifier indicates the second terminal device; the second local identifier indicates the first terminal device; and the first identifier is the radio bearer identifier, or the first identifier is a PC5 configuration index, or the first identifier is a logical channel identifier;
determining, by the SRAP entity of the second terminal device based on the SLRB configuration information, a PDCP entity associated with the first identifier; and
sending, by the SRAP entity of the second terminal device, the first data to the PDCP entity that is in the second terminal device and that is associated with the first identifier.

28. The method according to claim 27, wherein the method further comprises:
determining, by the second terminal device based on the second local identifier, that a source terminal device of the first data is the first terminal device.

29. The method according to any one of claims 23 to 28, wherein the method further comprises:
receiving, by the SRAP entity of the second terminal device, fourth data from the PDCP entity of the second terminal device;
determining, by the SRAP entity of the second terminal device based on the SLRB configuration information, the first identifier associated with the PDCP entity of the second terminal device, wherein the first identifier is the radio bearer identifier, or the first identifier is a PC5 configuration index, or the first identifier is a logical channel identifier; and
sending, by the second terminal device based on a fourth mapping relationship, third data to the relay terminal device by using a second RLC bearer associated with both the first identifier and the second local identifier, wherein the second local identifier indicates the first terminal device; the fourth mapping relationship comprises a mapping relationship among the first identifier, the second local identifier, and the second RLC bearer; and the third data comprises the fourth data, the first identifier, and the second local identifier.

30. The method according to claim 29, wherein the method further comprises:
determining, by the second terminal device, the fourth mapping relationship based on a transmission requirement between the second terminal device and the relay terminal device.

31. The method according to claim 29 or 30, wherein the method further comprises:
sending, by the second terminal device to the relay terminal device, the second local identifier and a layer-2 identifier that is of the first terminal device and that is associated with the second local identifier.

32. A communication apparatus, wherein the communication apparatus comprises a processor, and the processor is configured to run a computer program or instructions, to enable the communication apparatus to perform the communication method according to any one of claims 1 to 12, the communication method according to any one of claims 13 to 22, or the communication method according to any one of claims 23 to 31.

33. A computer-readable storage medium, wherein the computer-readable storage medium stores computer instructions or a program, and when the computer instructions or the program is run on a computer, the communication method according to any one of claims 1 to 12 is performed, the communication method according to any one of claims 13 to 22 is performed, or the communication method according to any one of claims 23 to 31 is performed.

34. A computer program product, wherein the computer program product comprises computer instructions, and when some or all of the computer instructions are run on a computer, the communication method according to any one of claims 1 to 12 is performed, the communication method according to any one of claims 13 to 22 is performed, or the communication method according to any one of claims 23 to 31 is performed.
